# EUROPEAN PATENT APPLICATION

(11) **EP 4 800 558 A1**
(43) Date of publication of application: **02.09.2026**
(21) Application number: 24895153.5
(22) Date of filing: 24.10.2024
(51) Int. Cl.: G06F 9/54

(54) **DATA PROCESSING METHOD AND SYSTEM**

(30) Priority: 21.11.2023 CN 202311557722
(71) Applicant: Huawei Technologies Co., Ltd., Shenzhen, Guangdong 518129 (CN)
(72) Inventor: KANG, Junbin, Shenzhen, Guangdong 518129 (CN)
(74) Representative: Maiwald GmbH
(86) International application number: PCT/CN2024/127011
(87) International publication number: WO 2025/107984

(57) **Abstract**

This application discloses a data processing method and system. The method includes: A first client broadcasts a write command, where the write command includes a first identifier, to-be-written first content of a first object, and a to-be-written first version number, and the first identifier is a local maximum term identifier of more than half of servers in a replication group; when a local maximum term identifier is the first identifier and a local maximum version number corresponding to the first object is less than the first version number, a server in the replication group writes the first content and the first version number, and sends, to the first client, first information indicating agreement to the write command; and when receiving the first information sent by more than half of the servers in the replication group, including a first server, the first client broadcasts a commit command, where the commit command indicates to update a status of the first content corresponding to the first version number to a committed state. In addition to implementing data replication, a fault tolerance rate is ensured to some extent, and a write operation latency can be reduced, thereby improving data processing efficiency.

## Description

This application claims priority to Chinese Patent Application No. 202311557722.2, filed with the China National Intellectual Property Administration on November 21, 2023 and entitled "DATA PROCESSING METHOD AND SYSTEM", which is incorporated herein by reference in its entirety.

### TECHNICAL FIELD

This application relates to the data replication field, and in particular, to a data processing method and system.

### BACKGROUND

When a server uses a primary/standby replication protocol to read and write data, a write operation has a high latency and a read/write operation throughput is low. In addition, in a process of switching to a secondary node when a primary node is faulty, a system cannot provide services for a client. When the server uses a Paxos or Raft protocol to read and write data, a globally unique write sequence needs to be determined through a replication state machine log before data replication. As a result, write amplification occurs.

How to ensure a fault tolerance rate to some extent while reducing an operation latency and resolving write amplification during implementation of data replication is an urgent technical problem to be resolved.

### SUMMARY

This application discloses a data processing method and system, so that when data replication is implemented, a service can still be provided for a client when a few servers are faulty, and an operation latency can be reduced, thereby improving data processing efficiency.

According to a first aspect, this application provides a data processing method. The method is applied to a data processing system. The data processing system includes a first client and a replication group. Local maximum term identifiers in more than half of servers in the replication group are a first identifier. The first identifier indicates that a consensus that a first server in the replication group serves as a first role is reached in the replication group. The method includes: The first client broadcasts a first write command, where the first write command includes the first identifier, to-be-written first content of a first object, and a to-be-written first version number; when a local maximum term identifier is the first identifier and a local maximum version number corresponding to the first object is less than the first version number, a server in the replication group writes the first content and the first version number locally, and sends first information to the first client, where the first information indicates agreement to the first write command; and when receiving the first information sent by more than half of the servers in the replication group, including the first server, the first client broadcasts a commit command, where the commit command indicates to update a status of the first content corresponding to the first version number to a committed state.

Herein, a server may be a network-side device having a data processing capability. The network-side device may be, for example, a server deployed on a network side, or a component (for example, the component may be a chip or an integrated circuit) in the server. The network-side device may be deployed in a cloud environment or an edge environment. This is not specifically limited herein.

Herein, a client may be a terminal device. The terminal device may be, for example, user equipment (a mobile phone, a computer, a tablet computer, a palmtop computer, a desktop computer, a headset, a stereo, a wearable device, a vehicle-mounted device, a virtual reality device, an augmented reality device, or the like), a smart home device, an intelligent transportation device, or an intelligent manufacturing device (such as a robot, an industrial device, intelligent logistics, or an intelligent factory), or may be a component (for example, a chip or an integrated circuit) in the terminal device.

Herein, the first version number corresponds to the first content of the first object. The first version number identifies the write of the first content of the first object. It may be understood that, if to-be-written objects are different, version numbers carried in write commands are different. For a same object, if to-be-written content is different, version numbers carried in write commands are also different.

Herein, when the method is applied to a file storage system, the first object may be a basic data unit in the file storage system, and may be represented by using an identifier ID and an offset of a file. When the method is applied to object storage, the first object is a key (key) of an object. When the method is applied to block storage, the first object may be an identifier ID of a block.

For example, the first role is a leader or a semi-leader. If the first role is the leader, the first server is a server that stores latest-version data of all objects and that is in the replication group. If the first role is the semi-leader, the first server may be, for example, a server that stores latest-version data of some objects and that is in the replication group. In roles played by the servers in the replication group, there is only one leader and one semi-leader, and the leader and the semi-leader do not exist at the same time.

Correspondingly, when the first role is the leader, a replication status of the replication group is leader-based quorum replication (leader-based quorum replication), which may be denoted as a first state or a replication state corresponding to the leader. When the first role is the semi-leader, the replication status of the replication group is semi-leader quorum replication (semi-leader quorum replication), which may be denoted as a second state or a replication state corresponding to the semi-leader.

In this application, a slot ID of a slot in which a consensus value is located in a local log of the server is referred to as a term identifier. In other words, the slot ID at which the consensus value is stored in the log is referred to as a term identifier. Herein, the slot ID is a positive integer, and a larger slot ID indicates a larger term identifier. The slot ID may also be understood as an entry of the log. A consensus value of one instance is stored in each slot in the log. The consensus value records an identifier of a server for which a consensus that the server serves as a leader or a semi-leader is reached in the current replication group, along with a corresponding replication state. Servers that reaches the consensus in the replication group each store the consensus value in a same slot of a log locally. Herein, a process of reaching a consensus that a server serves as a leader or a semi-leader in the replication group is referred to as an instance.

It may be understood that, if a server participates in a plurality of elections about a leader or a semi-leader and a consensus is reached in each election, a local log of the server also stores consensus values of a plurality of instances. Further, it is assumed that the plurality of instances include an instance 1 and an instance 2, where the instance 2 occurs later than the instance 1. In this case, a slot ID corresponding to a consensus value of the instance 2 in the log is greater than a slot ID corresponding to a consensus value of the instance 1 in the log, that is, a term identifier corresponding to the instance 2 is greater than a term identifier corresponding to the instance 1. In this case, a currently local maximum term identifier of the server is the term identifier corresponding to the instance 2. In this application, the local maximum term identifier of the server may also be referred to as a local latest term identifier of the server.

It may be understood that each successful election corresponds to a new term identifier. When consensuses that a same server serves as a same role is reached in the replication group at different moments, corresponding term identifiers are different.

For example, after the server writes the first content and the first version number, the status of the first content of the first object corresponding to the first version number is a "ready" state, which means that the current first content of the first object can be rolled back or committed. When the status of the first content of the first object corresponding to the first version number is a "committed" state, it means that the current first content of the first object is readable.

In the foregoing method, in a write process, content of an object is written into the replication group in a "majority write" manner. To be specific, the client broadcasts a write command, and each server in the replication group may directly respond to the client after determining, locally, whether a write condition is satisfied when the server receives the write command. When the client receives, from a majority (namely, more than half) of the servers in the replication group, replies indicating agreement to the write, the client determines that this write can be completed. In comparison with performing a write operation according to a primary/standby replication protocol or an existing Paxos protocol or Raft protocol, this manner can reduce a write operation latency and improve data processing efficiency. In addition, in comparison with the primary/standby replication protocol, this application further provides a fault tolerance rate to some extent. For example, when less than half of the servers in the replication group are faulty, services can still continue to be provided for the client. In comparison with the existing Paxos protocol or Raft protocol, in this application, there is no need to determine a globally unique write sequence before data is written. Therefore, a write amplification problem caused by object writing is resolved.

Optionally, a quantity of servers included in the replication group is 2f+1, and f is a positive integer. In this case, "more than half" of the servers in the replication group may be understood as greater than f, or may be referred to as a majority. In this way, there is a fault tolerance rate to some extent.

Optionally, before the first client broadcasts the first write command, the method further includes: The first client obtains the first identifier from the replication group. For example, "obtaining" may be performed each time when there is a write requirement, or may be performed periodically, or may be performed based on a trigger condition. In this way, a term identifier obtained by the first client from the replication group may be a currently latest term identifier locally stored by a majority of the servers in the replication group, so that the first client can read and write an object in a correct manner.

For example, the method further includes: A server in the replication group sends second information to the first client when a local maximum term identifier is the first identifier and a local maximum version number corresponding to the first object is greater than or equal to the first version number, where the second information indicates rejection of the first write command, and the second information includes the local maximum version number corresponding to the first object in the server; and the first client broadcasts a write command when receiving the second information sent by more than half of the servers in the replication group, where the write command includes the first identifier, the to-be-written first content of the first object, and a to-be-written second version number, and the second version number is greater than a maximum version number that corresponds to the first object and that is in the second information received by the first client. In other words, when the client receives the second information that is sent by the majority of the servers in the replication group and that indicates rejection of the first write command, the client learns that this write fails. In this case, the client may re-determine a version number based on the received second information, and re-initiate a write command based on the version number, to request the replication group to write the first content of the first object again.

Optionally, the first role is the leader, the data processing system further includes a second client, and the method further includes: The second client sends a read command to the first server, where the read command is used to request to read the first object, and the read command includes the first identifier; and the first server sends latest content of the first object to the second client when a local maximum term identifier is the first identifier,.

For example, the latest content of the first object may be the first content, or may be other content of the first object written after the first content of the first object.

In the foregoing implementation, the first role is the leader, and the client learns, by obtaining the first identifier, that the consensus that the first server serves as the leader is reached in the replication group. In this case, the client directly requests, in a "leader read" mode, the first server that serves as the leader to read the target object.

For example, that the first server sends the latest content of the first object to the second client includes: The first server sends the latest content of the first object to the second client after the first server updates, based on the commit command, the status of the first content corresponding to the first version number to the committed state. In other words, when a server receives the read command for requesting to read the first object, if content of the first object locally stored in the server is currently in a "ready" state and not in a "committed" state, the server needs to wait until the content of the first object is in the "committed" state, and then respond to the read command. In this way, the client can be prevented from reading expired data.

Optionally, the first role is the leader, the data processing system further includes a second client, and the method further includes: The second client sends a read command to the first server, where the read command includes a second identifier different from the first identifier; and the first server replies with rejection of the read command, and sends the first identifier to the second client.

It may be understood that, when the first server is not faulty, the first identifier is still the currently latest term identifier (or the maximum term identifier) that is locally stored in a majority of the servers in the replication group. In this case, the second client may not query a new term identifier from the replication group for a long time. Therefore, the read command sent by the second client carries the second identifier that is recently used by the second client. Because the second identifier has expired, the read command sent by the second client is to be rejected by the first server, so that the second client can be prevented from reading expired data.

Optionally, the first role is the leader, the data processing system further includes a third client, and the method further includes: The third client sends a read command to the first server; and when any one of the following conditions is satisfied, the first server replies with rejection of the read command sent by the third client:
before the read command sent by the third client is received, the first server fails to retry heartbeat communication within a preset duration; or
before the read command sent by the third client is received, the first server determines, based on heartbeat information sent by a second server in the replication group, that the first identifier is invalid, where the heartbeat information includes a local maximum term identifier of the second server, and the local maximum term identifier of the second server is greater than the first identifier.

Herein, that the first server fails to retry heartbeat communication within the preset duration may be understood as that a fault of the first server cannot be rectified. For example, one time of heartbeat communication succeeds. The first server broadcasts heartbeat information once and receives heartbeat information sent by more than half of the servers in the replication group, and the first server determines that this heartbeat is successful. It is assumed that a server sends heartbeat information once at an interval of T, and the server is allowed to attempt to send the heartbeat information for a maximum of M times. In this case, the preset duration may be M*T, and M*T may also be referred to as a maximum duration in which the server is allowed to retry heartbeat communication.

For example, when any one of the foregoing conditions is satisfied, the first server may further locally mark that the first server is invalid. When the first server is in an invalid state, the first server rejects a read command and a write command from any client, that is, the first client does not provide a service externally.

In the foregoing implementation, when a fault of a server that serves as a leader cannot be rectified or a server that serves as a leader determines that the local maximum term identifier expires (or becomes invalid), the server rejects a read command from a client, so as to prevent the client from reading expired content of an object.

Optionally, the first role is the leader, less than half of the servers in the replication group are faulty, and the faulty servers do not include the first server. In this way, when a few servers (excluding the first server that serves as the leader) in the replication group are faulty, a read process and a write process in a "leader mode" are not affected, and the replication group can continue to provide services for a client.

Optionally, the first role is the leader, when the first server is faulty, local maximum term identifiers in more than half of the servers in the replication group are a third identifier, the third identifier is greater than the first identifier, the third identifier indicates that a consensus that a third server in the replication group serves as a second role is reached in the replication group, the second role is a semi-leader, and the method further includes: If a server in which a local maximum term identifier is the third identifier and that is in the replication group receives a second write command within a waiting duration starting from time when the third server serves as the second role, the server replies with rejection of the second write command, where the waiting duration is greater than a maximum duration in which the first server is allowed to retry heartbeat communication.

Herein, for the maximum duration in which the first server is allowed to retry heartbeat communication, refer to the foregoing descriptions of the maximum duration in which the server is allowed to retry heartbeat communication. Details are not described herein again.

In the foregoing implementation, when the first server is faulty, through restriction, the servers in the replication group that reach the consensus that the third server serves as the semi-leader need to reject the write command if the servers receive the write command from the client within the waiting duration starting from the time when the local maximum term identifiers are the third identifier, and enable a write service only after the waiting duration, and the waiting duration is sufficient for the first server that serves as the leader to find that the first server is invalid. In this way, when new content of the target object is written into the replication group, the client can be prevented from reading expired content of the target object from the first server based on the expired first identifier.

Optionally, the method further includes: When the third server determines that the third server is a server that currently stores latest-version data of all objects and that is in the replication group, the third server broadcasts an election request, where the election request is used to request to elect the third server as a leader. In this way, the third server that serves as the semi-leader may also initiate a new election, to request to elect the third server as the leader.

Optionally, the first role is the semi-leader, and that the server in the replication group writes the first content and the first version number when the local maximum term identifier is the first identifier and the local maximum version number corresponding to the first object is less than the first version number includes: If the server in the replication group receives the first write command after a waiting duration starting from time when the first server serves as the first role, the server writes the first content and the first version number when the local maximum term identifier is the first identifier and the local maximum version number corresponding to the first object is less than the first version number, where the waiting duration is greater than a maximum duration in which a server serving as a leader is allowed to retry heartbeat communication.

In the foregoing implementation, the first role is the semi-leader. Through restriction, servers in the replication group that reach a consensus that the first server serves as the semi-leader need to enable a write service only after a waiting duration starting from time when local maximum term identifiers are the first identifier, and the waiting duration is sufficient for a server that serves as a leader to find that the server is invalid. In this way, when new content of the target object is written into the replication group, and the client uses an expired term identifier to read the target object from the replication group, the client is prevented from reading expired content of the target object.

Optionally, the data processing system further includes a second client, and the method further includes: The second client broadcasts a read command, where the read command is used to request to read the first object, and the read command includes the first identifier; a server in the replication group sends a read result to the second client when a local maximum term identifier is the first identifier, where the read result includes a second version number and second content of the first object corresponding to the second version number, and the second version number is a local maximum version number corresponding to the first object in the server; and when receiving the read results sent by more than half of the servers in the replication group, the second client obtains the second content of the first object corresponding to a maximum version number from the received read results.

In the foregoing implementation, when the first role is the semi-leader, a client learns, based on the obtained first identifier, that a consensus that the first server serves as the semi-leader is reached in the replication group. In this case, the client broadcasts a read command in a "majority read" mode to read the target object. Because content of an object is written in a "majority write" mode, there is definitely an intersection between servers participating in writing latest content of the target object and servers feeding back read results (that is, there is at least one same server), thereby ensuring that the client definitely reads the latest content of the target object. In comparison with the primary/standby replication protocol, the Paxos protocol, or the Raft protocol, a read process may not be affected when a few servers are faulty.

According to a second aspect, this application provides a data processing method. The method is applied to a client, and the method includes: broadcasting a write command, where the write command includes a first identifier, to-be-written first content of a first object, and a to-be-written first version number, the first identifier is a local maximum term identifier of more than half of servers in a replication group, and the first identifier indicates that a consensus that a first server in the replication group serves as a first role is reached in the replication group; and when the client receives first information sent by more than half of the servers in the replication group, broadcasting a commit command, where the first information indicates agreement to the write command, and the commit command indicates to update a status of the first content corresponding to the first version number to a committed state.

For example, the first role is a leader or a semi-leader.

Herein, for the client, the replication group, the first role, and the like, refer to related descriptions of corresponding content in the first aspect. Details are not described herein again.

In the foregoing method, the client writes content of an object into the replication group in a "majority write" manner, that is, the client broadcasts a write command. When the client receives, from a majority (namely, more than half) of the servers in the replication group, replies indicating agreement to the write, the client determines that this write can be completed. In comparison with performing a write operation according to a primary/standby replication protocol or an existing Paxos protocol or Raft protocol, this manner can reduce a write operation latency and improve data processing efficiency. In addition, in comparison with the primary/standby replication protocol, this application further provides a fault tolerance rate to some extent. For example, when less than half of the servers in the replication group are faulty, a write process initiated by the client is not affected. In comparison with the existing Paxos protocol or Raft protocol, in this application, there is no need to determine a globally unique write sequence before data is written. Therefore, a write amplification problem caused by object writing is resolved.

Optionally, before the write command is broadcast, the method further includes: obtaining the first identifier from the replication group. Herein, for descriptions of "obtaining", refer to the descriptions of the corresponding content in the first aspect. In this way, a term identifier that may be obtained by the client from the replication group is a currently latest term identifier locally stored by a majority of the servers in the replication group, so that the first client can read and write an object in a correct manner.

Optionally, the first role is the semi-leader, and the method further includes: broadcasting a read command, where the read command is used to request to read the first object, and the read command includes the first identifier; receiving a read result sent by a server in the replication group, where the read result includes a second version number and second content of the first object corresponding to the second version number, and the second version number is a local maximum version number corresponding to the first object in the server; and when the client receives the read results sent by more than half of the servers in the replication group, obtaining the second content of the first object corresponding to a maximum version number from the received read results.

In the foregoing implementation, when the first server serves as the semi-leader, the client reads a target object from the replication group in a "majority read" mode. Because there is definitely an intersection between servers participating in writing latest content of the target object and servers feeding back read results (that is, there is at least one same server), it can be ensured that the client definitely reads the latest content of the target object.

Optionally, the first role is the leader, and the method further includes: sending a read command to the first server, where the read command is used to request to read the first object, and the read command includes the first identifier; and receiving latest content of the first object sent by the first server.

In the foregoing implementation, when the first server serves as the leader, after the client obtains the first identifier in time, the client directly reads the target object from the first server in a "leader read" mode, thereby reducing a read latency and improving data processing efficiency.

Optionally, the first role is the leader, and the method further includes: obtaining a second identifier from the replication group, where the second identifier is a currently local maximum term identifier of more than half of the servers in the replication group, the second identifier indicates that a consensus that a second server in the replication group serves as a second role is reached in the replication group, the second role is a semi-leader, and the second identifier is greater than the first identifier; and performing a data read operation or write operation based on the second identifier.

In the foregoing implementation, the client learns, based on the second identifier obtained in time, that the consensus that the second server serves as the semi-leader is currently reached in the replication group. When the client has a write or read requirement, a term identifier carried in a write command or read command sent by the client is the second identifier.

Optionally, the method further includes: sending a read command to the first server, where the read command is used to request to read the first object, and the read command includes the first identifier. Obtaining the second identifier from the replication group includes: obtaining the second identifier from the replication group when receiving, from the first server, a reply with rejection of the read command.

It can be learned that, the client sends, based on the first identifier, the read command to the first server that serves as the leader, and when receiving information that is replied by the first server and indicates rejection of the read command, the client is triggered to obtain a latest term identifier from the replication group.

For example, after the first write command is broadcast, the method further includes: receiving second information sent by a server in the replication group, where the second information indicates rejection of the first write command, and the second information includes a local maximum version number corresponding to the first object in the server; and when the client receives the second information sent by more than half of the servers in the replication group, broadcasting a second write command, where the second write command includes the first identifier, the to-be-written first content of the first object, and a to-be-written third version number, and the third version number is greater than a maximum version number that corresponds to the first object and that is in the second information received by the first client.

In other words, when the client receives the second information that is sent by the majority of the servers in the replication group and that indicates rejection of the first write command, the client learns that this write fails. In this case, the client may re-determine a version number based on the received second information, and re-initiate a write command based on the version number, to request the replication group to write the first content of the first object again.

According to a third aspect, this application provides a data processing system, where the system includes a first client and a replication group including a plurality of servers, local maximum term identifiers in more than half of the servers in the replication group are a first identifier, and the first identifier indicates that a consensus that a first server in the replication group serves as a first role is reached in the replication group. The first client is configured to broadcast a first write command, where the first write command includes the first identifier, to-be-written first content of a first object, and a to-be-written first version number. A server in the replication group is configured to: when a local maximum term identifier is the first identifier and a local maximum version number corresponding to the first object is less than the first version number, write the first content and the first version number, and send first information to the first client, where the first information indicates agreement to the first write command. The first client is configured to broadcast a commit command when receiving the first information sent by more than half of the servers in the replication group, including the first server, where the commit command indicates to update a status of the first content corresponding to the first version number to a committed state.

Optionally, a quantity of servers included in the replication group is 2f+1, and f is a positive integer.

Optionally, before the first client is configured to broadcast the first write command, the first client is further configured to obtain the first identifier from the replication group.

For example, the server in the replication group is further configured to send second information to the first client when the local maximum term identifier is the first identifier and the local maximum version number corresponding to the first object is greater than or equal to the first version number, where the second information indicates rejection of the first write command, and the second information includes the local maximum version number corresponding to the first object in the server. The first client is configured to broadcast a write command when the first client receives the second information sent by more than half of the servers in the replication group, where the write command includes the first identifier, the to-be-written first content of the first object, and a to-be-written second version number, and the second version number is greater than a maximum version number that corresponds to the first object and that is in the second information received by the first client.

Optionally, the first role is a leader, the system further includes a second client. The second client is configured to send a read command to the first server, where the read command is used to request to read the first object, and the read command includes the first identifier; and the first server is configured to send latest content of the first object to the second client when a local maximum term identifier is the first identifier.

Further, the first server is specifically configured to: after updating, based on the commit command, the status of the first content corresponding to the first version number to the committed state, if the local maximum term identifier is the first identifier, send the latest content of the first object to the second client.

Optionally, the first role is a leader, the system further includes a second client. The second client is configured to send a read command to the first server, where the read command includes a second identifier different from the first identifier; and the first server is further configured to: reply with rejection of the read command, and send the first identifier to the second client.

Optionally, the first role is the leader, the system further includes a third client. The third client is configured to send a read command to the first server; and when any one of the following conditions is satisfied, the first server is further configured to reply with rejection of the read command sent by the third client:
before the read command sent by the third client is received, the first server fails to retry heartbeat communication within a preset duration; or
before the read command sent by the third client is received, the first server determines, based on heartbeat information sent by a second server in the replication group, that the first identifier is invalid, where the heartbeat information includes a local maximum term identifier of the second server, and the local maximum term identifier of the second server is greater than the first identifier.

Optionally, the first role is the leader, less than half of the servers in the replication group are faulty, and the faulty servers do not include the first server.

Optionally, the first role is the leader, when the first server is faulty, local maximum term identifiers in more than half of the servers in the replication group are a third identifier, the third identifier is greater than the first identifier, the third identifier indicates that a consensus that a third server in the replication group serves as a second role is reached in the replication group, and the second role is a semi-leader. If a server in which a local maximum term identifier is the third identifier and that is in the replication group receives a second write command within a waiting duration starting from time when the third server serves as the second role, the server is further configured to reply with rejection of the second write command, where the waiting duration is greater than a maximum duration in which the first server is allowed to retry heartbeat communication.

Optionally, when the third server determines that the third server is a server that currently stores latest-version data of all objects and that is in the replication group, the third server is further configured to broadcast an election request, where the election request is used to request to elect the third server as a leader.

Optionally, the first role is a semi-leader, and if the server in the replication group receives the first write command after a waiting duration starting from time when the first server serves as the first role, the server is configured to write the first content and the first version number when the local maximum term identifier is the first identifier and the local maximum version number corresponding to the first object is less than the first version number, where the waiting duration is greater than a maximum duration in which a server serving as a leader is allowed to retry heartbeat communication.

Optionally, the system further includes a second client. The second client is configured to broadcast a read command, where the read command is used to request to read the first object, and the read command includes the first identifier. A server in the replication group is configured to send a read result to the second client when a local maximum term identifier is the first identifier, where the read result includes a second version number and second content of the first object corresponding to the second version number, and the second version number is a local maximum version number corresponding to the first object in the server. The second client is configured to: when receiving the read results sent by more than half of the servers in the replication group, obtain the second content of the first object corresponding to a maximum version number from the received read results.

According to a fourth aspect, this application provides a data processing apparatus. The apparatus is a client or is included in the client. The apparatus includes: a sending unit, configured to broadcast a write command, where the write command includes a first identifier, to-be-written first content of a first object, and a to-be-written first version number, the first identifier is a local maximum term identifier of more than half of servers in a replication group, and the first identifier indicates that a consensus that a first server in the replication group serves as a first role is reached in the replication group. The sending unit is further configured to broadcast a commit command when a receiving unit in the apparatus receives first information sent by more than half of the servers in the replication group, where the first information indicates agreement to the write command, and the commit command indicates to update a status of the first content corresponding to the first version number to a committed state.

Optionally, the receiving unit is further configured to obtain the first identifier from the replication group.

Optionally, the first role is a semi-leader. The sending unit is further configured to broadcast a read command, where the read command is used to request to read the first object, and the read command includes the first identifier. The receiving unit is configured to receive a read result sent by a server in the replication group, where the read result includes a second version number and second content of the first object corresponding to the second version number, and the second version number is a local maximum version number corresponding to the first object in the server. When the receiving unit receives the read results sent by more than half of the servers in the replication group, a processing unit in the apparatus is configured to obtain the second content of the first object corresponding to a maximum version number from the received read results.

Optionally, the first role is a leader. The sending unit is further configured to send a read command to the first server, where the read command is used to request to read the first object, and the read command includes the first identifier. The receiving unit is further configured to receive latest content of the first object sent by the first server.

Optionally, the first role is a leader. The receiving unit is further configured to obtain a second identifier from the replication group, where the second identifier is a currently local maximum term identifier of more than half of the servers in the replication group, the second identifier indicates that a consensus that a second server in the replication group serves as a second role is reached in the replication group, the second role is a semi-leader, and the second identifier is greater than the first identifier. A processing unit in the apparatus is configured to perform a data read operation or write operation based on the second identifier.

Optionally, the sending unit is further configured to send a read command to the first server, where the read command is used to request to read the first object, and the read command includes the first identifier. The receiving unit is specifically configured to obtain the second identifier from the replication group when receiving, from the first server, a reply with rejection of the read command.

For example, the receiving unit is further configured to receive second information sent by a server in the replication group, where the second information indicates rejection of the first write command, and the second information includes a local maximum version number corresponding to the first object in the server. When the receiving unit receives the second information sent by more than half of the servers in the replication group, the sending unit is further configured to broadcast a second write command, where the second write command includes the first identifier, the to-be-written first content of the first object, and a to-be-written third version number, and the third version number is greater than a maximum version number that corresponds to the first object and that is in the second information received by the first client.

According to a fifth aspect, this application provides a data processing apparatus. The apparatus includes a processor and a memory, the memory is configured to store program instructions, and the processor invokes the program instructions in the memory, so that the apparatus performs the method according to any one of the second aspect or the possible implementations of the second aspect.

According to a sixth aspect, this application provides a computer-readable storage medium, including computer instructions. When the computer instructions are run by a processor, the method according to any one of the second aspect or the possible implementations of the second aspect is implemented. When the computer instructions are executed by the data processing system, the method according to any one of the first aspect or the possible implementations of the first aspect is implemented.

According to a seventh aspect, this application provides a computer program product. When the computer program product is executed by a processor, the method according to any one of the second aspect or the possible embodiments of the second aspect is implemented. Alternatively, when the computer program product is executed by a data processing system, the method according to any one of the first aspect or the possible embodiments of the first aspect is implemented.

For example, the computer program product may be a software installation package.

### BRIEF DESCRIPTION OF DRAWINGS

FIG. 1 is a diagram of an architecture of a data processing system according to an embodiment of this application;
FIG. 2 is a flowchart of a data writing method according to an embodiment of this application;
FIG. 3 is a flowchart of a data reading method according to an embodiment of this application;
FIG. 4 is a flowchart of another data reading method according to an embodiment of this application;
FIG. 5 is a diagram of an application scenario according to an embodiment of this application;
FIG. 6A is a diagram of a process in which a replication group runs a Paxos protocol to elect a semi-leader according to an embodiment of this application;
FIG. 6B is a diagram of another process in which a replication group runs a Paxos protocol to elect a semi-leader according to an embodiment of this application;
FIG. 7 is a diagram of a log that is locally used by each server in a replication group to store a consensus value according to an embodiment of this application;
FIG. 8 is a diagram of a structure of a data processing apparatus according to an embodiment of this application;
FIG. 9 is a diagram of a structure of another data processing apparatus according to an embodiment of this application; and
FIG. 10 is a diagram of a structure of a communication device according to an embodiment of this application.

### DESCRIPTION OF EMBODIMENTS

It should be noted that prefix words such as "first" and "second" are used in this application only to distinguish between different described objects, and have no limitation on locations, an order, priorities, a quantity, content, or the like of the described objects. For example, if the described objects are "fields", ordinal numbers before "field" in a "first field" and a "second field" do not limit locations or an order of the "fields", and "first" and "second" do not limit whether "field" modified by "first" and "field" modified by "second" are in a same message, and do not limit an order of the "first field" and the "second field". For another example, if the described objects are "levels", ordinal numbers before "level" in a "first level" and a "second level" do not limit priorities of "levels". For another example, a quantity of described objects is not limited by a prefix word, and may be one or more. A "first device" is used as an example. A quantity of "devices" may be one or more. In addition, objects modified by different prefix words may be the same or different. For example, if a described object is a "device", a "first device" and a "second device" may be a same device, devices of a same type, or devices of different types. For another example, if a described object is "information", "first information" and "second information" may be information of same content or information of different content. In conclusion, use of the prefix word used to distinguish described objects in embodiments of this application does not constitute a limitation on the described objects. For descriptions of the described objects, refer to the context descriptions in claims or embodiments, and use of such a prefix word should not constitute a redundant limitation.

It should be noted that, in embodiments of this application, a description manner like "at least one (or at least one piece) of a1, a2, ..., and an" is used, including a case in which any one of a1, a2, ..., and an exists alone, and also including a case of any combination of a1, a2, ..., and an. Each case may exist alone. For example, a description manner of "at least one of a, b, and c" includes a case of a single a, a single b, a single c, a combination of a and b, a combination of a and c, a combination of b and c, or a combination of a, b, and c.

For ease of understanding, the following first describes related terms that may be used in embodiments of this application.

### (1) Hybrid logical clock

The hybrid logical clock (Hybrid Logical Clock, HLC) is a clock algorithm used in a distributed system, and is designed to provide an ordered timestamp for an event. It may be understood that an event occurrence order may be determined in the distributed system based on time of the event.

The HLC clock algorithm is implemented based on a combination of a physical clock and a logical clock. The physical clock is a real-world clock based on physical time. All nodes in the distributed system can access the physical clock, and the physical clock is used to provide a global clock synchronization logical clock. Each node participating in the distributed system maintains a logical clock counter of the node. The logical clock is incremented when an event occurs, so that a logical timestamp is allocated to each event. Therefore, the logical clock may be understood as an incremental counter.

In embodiments of this application, a version number carried in a write command may be generated based on the hybrid logical clock. The version number is used to distinguish different versions of a data object.

### (2) Broadcast

Broadcast is a "one-to-many" communication mode. Broadcast is a communication mode that allows a broadcast source to send information to all receivers in a broadcast communication domain of the broadcast source. All receivers in the broadcast communication domain may be identified by using a broadcast address (Broadcast Address). The broadcast source sends the information to the broadcast address, and all receivers in the broadcast communication domain can receive and process the information.

The following describes technical solutions of embodiments of this application with reference to accompanying drawings.

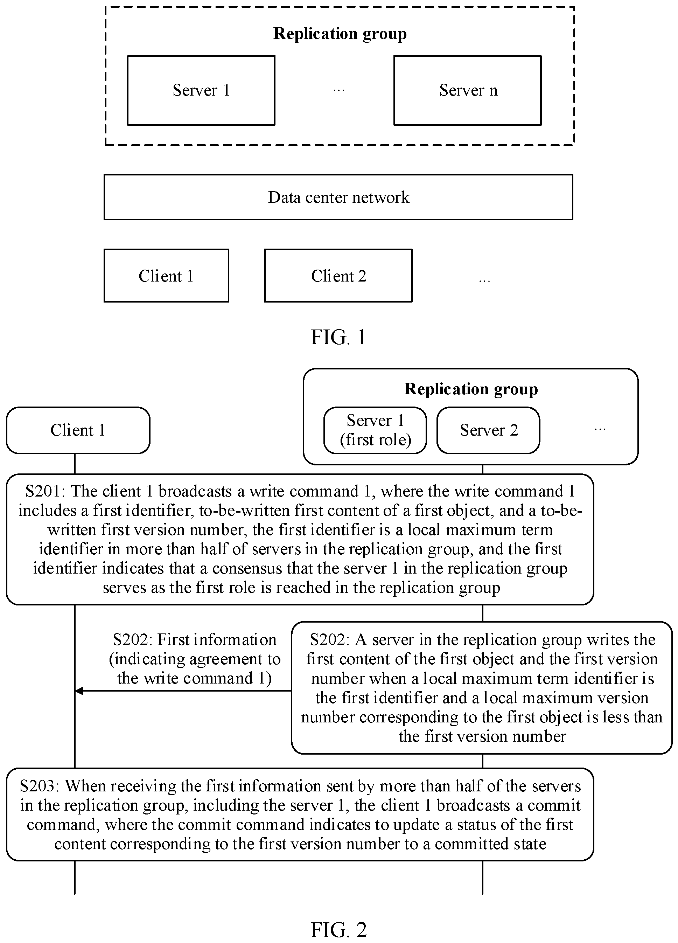

Refer to FIG. 1. FIG. 1 is a diagram of an architecture of a data processing system according to an embodiment of this application. The system can implement a data read operation and/or a data write operation, so that a client can access, with high availability, a service provided by a server. As shown in FIG. 1, the system includes a replication group and at least one client. The replication group includes a plurality of servers. The client performs wired communication or wireless communication with the servers in the replication group through a data center network. This is not specifically limited herein.

Distributed service logic and a replication protocol are deployed on each server in the replication group. The distributed service logic is used to process a user request from the client based on a service requirement, and operations related to the distributed service logic may be synchronized to other servers in the replication group according to the replication protocol. Herein, the replication protocol may be understood as the following data processing method provided in embodiments of this application. The replication protocol, as program code, may be integrated into distributed storage or distributed service software, or may be deployed on the servers in a manner of combining software and hardware. This is not specifically limited herein.

It may be understood that the replication group is a set of the plurality of servers having a data replication function. A total quantity of servers in the replication group is n, where n = 2f + 1, and f is a positive integer. For a data object (referred to as an object for short below) allocated to each replication group, high-availability access to the data object can be implemented by using the data processing method provided in this application (for example, when fewer than f servers in the replication group are faulty, a read/write operation can still be performed on the data object).

For example, each server in the replication group may play one of three roles: a leader (leader), a semi-leader (semi-leader), and a follower (follower) at any moment. At different moments, the role played by the server may be switched according to a preset rule. At any moment, in roles played by the servers in the replication group, there is only one leader and one semi-leader, and the leader and the semi-leader do not exist at the same time, while there may be a plurality of followers.

For example, it is assumed that a server 1 in the replication group is determined as a leader in the replication group through a consensus operation. In this case, the server 1 is a server that stores latest-version data of all objects and that is in the replication group. For another example, it is assumed that a server 2 in the replication group is determined as a semi-leader in the replication group through a consensus operation. In this case, the server 2 may be, for example, a server that stores latest-version data of some objects and that is in the replication group.

In embodiments of this application, the replication group has two replication states. The first state is leader-based quorum replication (leader-based quorum replication), and the second state is semi-leader quorum replication (semi-leader quorum replication). Each server in the replication group locally maintains a log to store a consensus value of an instance of a consensus protocol (for example, Paxos). The consensus value records an identifier of a server for which a consensus that the server serves as a leader or a semi-leader is reached in the current replication group, along with a corresponding replication state. Servers that reaches the consensus in the replication group each store the consensus value in a same slot of a log locally. In embodiments of this application, the log is used to store only the consensus value, and a slot ID at which the consensus value is stored in the log is referred to as a term identifier. The slot ID is a positive integer, and a larger slot ID indicates a larger term identifier. In some possible embodiments, the slot ID may also be understood as an entry of the log. Herein, a process of reaching a consensus that a server serves as a leader or a semi-leader in the replication group is referred to as an instance.

It may be understood that the local log of the server may store consensus values of a plurality of instances, and the plurality of instances include an instance 1 and an instance 2, where the instance 2 occurs later than the instance 1. In this case, a slot ID corresponding to a consensus value of the instance 2 in the log is greater than a slot ID corresponding to a consensus value of the instance 1 in the log, that is, a term identifier corresponding to the instance 2 is greater than a term identifier corresponding to the instance 1. In this case, a currently local maximum term identifier of the server is the term identifier corresponding to the instance 2. Herein, the local maximum term identifier of the server may also be referred to as a local latest term identifier.

For example, the replication group performs a consensus operation once. It is assumed that the server 1 in the replication group initiates a consensus voting request to elect the server 1 as a leader, and a consensus on electing the server 1 as the leader is reached in the replication group through consensus voting (that is, more than half of the servers in the replication group cast a positive vote). Finally, the servers in the replication group that have reached the consensus store a consensus value (namely, a result of the reached consensus) of the instance in slots corresponding to logs. In this case, currently local maximum term identifiers of a majority of the servers in the replication group are slot IDs (or referred to as log IDs) of the consensus value in the logs, and the consensus value corresponding to the term identifiers records a current replication state of the replication group and an identifier that is of the server 1 serving as the leader and that corresponds to the replication state.

It may be understood that one term identifier is generated in each election, and the term identifier increases with occurrence of a new election. A successful election means that more than half of the servers in the replication group store a consensus value of an instance corresponding to the election and a term identifier corresponding to the consensus value.

A leader election is used as an example. It is assumed that there are three servers in the replication group, which are respectively a server 1, a server 2, and a server 3. It is assumed that the server 1 initiates a consensus voting request to elect the server 1 as a leader, and both the server 1 and the server 2 cast a positive vote. Because more than half of the servers in the replication group cast the positive vote, a consensus that the server 1 serves as the leader is currently reached in the replication group. A term identifier corresponding to the server 1 is an identifier 1. In this case, the identifier 1 is a local maximum term identifier of the more than half (namely, the server 1 and the server 2) of the servers in the replication group, and the identifier 1 indicates that the server 1 in the replication group is determined as the leader in the replication group through a consensus operation.

Herein, a quantity of replication groups is not limited in embodiments of this application. FIG. 1 shows only one replication group. In some possible embodiments, the data processing system may also include a plurality of replication groups. For each replication group, refer to the descriptions of the replication group in FIG. 1. Details are not described herein again.

Herein, a server may be a network-side device having a data processing capability. The network-side device may be, for example, a server deployed on a network side, or a component (for example, the component may be a chip or an integrated circuit) in the server. The network-side device may be deployed in a cloud environment or an edge environment. This is not specifically limited herein.

Herein, a client may be a terminal device. The terminal device may be, for example, user equipment (a mobile phone, a computer, a tablet computer, a palmtop computer, a desktop computer, a headset, a stereo, a wearable device, a vehicle-mounted device, a virtual reality device, an augmented reality device, or the like), a smart home device (for example, a television, a robotic vacuum cleaner, a smart desk lamp, a speaker system, an intelligent lighting system, an electrical control system, home background music, a home theater system, an intercom system, or video surveillance), a smart transportation device (for example, an automobile, a ship, an unmanned aerial vehicle, a train, a van, or a truck), or a smart manufacturing device (for example, a robot, an industrial device, smart logistics, or a smart factory), or may be a component (for example, a chip or an integrated circuit) in the terminal device.

It may be understood that both the client and the server are nodes. The server is a name of a device having a data processing capability. In some application scenarios or some types of networks, the server may also be referred to as a replication node.

The data processing system shown in FIG. 1 may be used in a plurality of types of networks, for example, used in one or more of the following types of networks: a long term evolution (long term evolution, LTE) network, a 5th generation mobile communication technology (5th generation mobile communication technology, 5G), a wireless local area network (for example, Wi-Fi), Bluetooth (Bluetooth, BT), Zigbee (Zigbee), a vehicle-mounted short-range wireless communication network, or the like.

It should be noted that FIG. 1 is merely an example diagram of the architecture, but a quantity of network elements included in the system shown in FIG. 1 is not limited. Although not shown in FIG. 1, another functional entity may further be included in FIG. 1 in addition to the function entities shown in FIG. 1. In addition, a method provided in embodiments of this application may be applied to the data processing system shown in FIG. 1. Certainly, the method provided in embodiments of this application may also be applied to another data processing system. This is not limited in embodiments of this application.

Based on the system architecture shown in FIG. 1, for example, to ensure that the client can read latest data (or referred to as latest content) of an object, before reading or writing a replication group, any client may first query a consensus value of a latest instance of the replication group and a term identifier corresponding to the consensus value. The client may perform reading or writing based on an obtained maximum term identifier. For example, a sent read command or write command carries the maximum term identifier.

In a specific implementation, the client separately queries a consensus value of a latest instance locally stored by each server in the replication group and a term identifier corresponding to the consensus value, and determines, from replies of servers in the replication group, a same consensus value of a latest instance in the majority of the servers (that is, more than half of the servers in the replication group) and a term identifier corresponding to the consensus value. The term identifier is a maximum term identifier locally stored in the more than half of the servers in the replication group. When reading/writing the replication group, the client may perform verification based on the obtained maximum term identifier. For example, when a local maximum term identifier of a server in the replication group is not equal to the term identifier carried in the write command sent by the client, the server rejects the write command sent by the client. In addition, the client may learn, based on the obtained consensus value of the latest instance, a current replication state of the replication group and an identifier that is of a target server serving as a leader or a semi-leader and that corresponds to the replication status. In this way, the client may select a corresponding read/write manner.

In some possible embodiments, it may be possible that the server that serves as the leader in the replication group is faulty, and a new election is initiated in the replication group through a consensus operation to determine a server that serves as a semi-leader. This means that, in comparison with the server that serves as the leader and that is elected in the replication group in the previous election, a same consensus value of a latest instance in the majority of the servers in the replication group and a term identifier corresponding to the consensus value have changed. Therefore, the client may periodically query the replication group for a consensus value of a latest instance and a term identifier corresponding to the consensus value. In this way, after latest content of an object is written into the replication group, any client may read the latest content of the object.

For example, a periodicity for the client to query the replication group may be set by a user, or may be set by the system by default. Herein, a length of the periodicity for the client to query the replication group is not limited. In an example, the periodicity for the client to query the replication group is less than a maximum duration in which a server is allowed to retry heartbeat communication. In this way, when the server that serves as the leader in the replication group is faulty and a server that serves as a semi-leader is newly elected, the client may obtain a current latest term identifier of the replication group in time.

In another implementation, the client may not need to periodically query the replication group for a consensus value of a latest instance and a term identifier corresponding to the consensus value. For example, after the client obtains a consensus value of a latest instance and a term identifier corresponding to the consensus value by querying the replication group for the first time, the client may query the replication group again only when a trigger condition is satisfied. For example, the trigger condition may be that when the client requests to read the target object from the server that serves as the leader in the replication group, the request is rejected by the server.

Refer to FIG. 2. FIG. 2 is a flowchart of a data writing method according to an embodiment of this application. The method may be applied to the data processing system shown in FIG. 1. The data processing system includes at least a client 1 and a replication group, where the replication group includes a plurality of servers. The method includes but is not limited to the following steps.

S201: The client 1 broadcasts a write command 1, where the write command 1 includes a first identifier, to-be-written first content of a first object, and a to-be-written first version number, the first identifier is a local maximum term identifier of more than half of servers in the replication group, and the first identifier indicates that a consensus that a server 1 in the replication group serves as a first role is reached in the replication group.

Herein, when the method is applied to a file storage system, the first object may be a basic data unit in the file storage system, and may be represented by using an identifier ID and an offset of a file. When the method is applied to object storage, the first object is a key (key) of an object. When the method is applied to block storage, the first object may be an identifier ID of a block.

For example, before the client 1 broadcasts the write command 1, the client 1 obtains the first identifier from the replication group. Herein, for a process of obtaining the first identifier, refer to the foregoing descriptions of the corresponding content. Details are not described herein again.

Herein, a quantity of servers included in the replication group is 2f+1, and f is a positive integer.

It may be understood that the first identifier being also a local latest term identifier of the more than half of the servers in the replication group means that in a process in which the server 1 initiates a consensus voting to request to elect the server 1 as the first role, the more than half of the servers (including the server 1) in the replication group cast a positive vote. In other words, a consensus that the server 1 serves as the first role is reached in the replication group through a consensus operation.

In embodiments of this application, the first role is a leader or a semi-leader.

For example, when the first role is the leader, the server 1 is a server that stores latest-version data of all objects and that is in the replication group. When the first role is the semi-leader, the server 1 may be, for example, a server that stores latest-version data of some objects and that is in the replication group.

Further, if the first role is the leader, a current replication state of the replication group is a first state; or if the first role is the semi-leader, a current replication state of the replication group is a second state. Herein, for the first state and the second state, refer to the descriptions of the corresponding content in FIG. 1.

Herein, the first version number corresponds to the first content of the first object. The first version number identifies the write of the first content of the first object. It may be understood that, if to-be-written objects are different, version numbers carried in write commands are different. For a same object, if to-be-written content is different, version numbers carried in write commands are also different. In this way, when a server in the replication group stores content corresponding to a plurality of version numbers of the first object, whether to write the first content of the first object corresponding to the first version number may be determined by comparing the first version number with a local version number of the first object in the server, so that expired content of the first object can be prevented from being written. In addition, a version number is carried in a write command, so that a concurrent conflict caused by writing of different clients for a same object can be further resolved.

For example, the first version number may be generated by the client 1 based on a hybrid logical clock HLC algorithm, where an HLC includes a high-order physical clock and a low-order logical clock. For details, refer to the descriptions of the term "hybrid logical clock". For example, when generating the write command 1, the client 1 generates the first version number based on a current physical clock and a logical clock that is incremented by 1.

S202: When a local maximum term identifier is the first identifier and a local maximum version number corresponding to the first object is less than the first version number, a server in the replication group writes the first content of the first object and the first version number, and sends first information to the client 1, where the first information indicates agreement to the write command 1.

In embodiments of this application, because different first roles may affect writing of content of an object in the replication group, descriptions are provided below in different cases.

### Case 1: The first role is the leader.

In an implementation, the first role is the leader, that is, when the server 1 serves as the leader, and the server 1 is not faulty. When receiving the write command 1, a server in the replication group may determine, by checking the first identifier (that is, determining whether a local maximum term identifier is the first identifier) and comparing a local maximum version number of the first object with the first version number, whether to write the first content of the first object and the first version number based on the write command 1.

The server 1 is used as an example. A local maximum term identifier of the server 1 is the first identifier. If a local maximum version number corresponding to the first object in the server 1 is less than the first version number, it indicates that the server 1 has not historically written the content of the first object corresponding to the first version number. Therefore, the server 1 writes the first content and the first version number based on the received write command 1.

A server 2 in the replication group is used as an example. It is assumed that the server 2 receives the write command 1. If a local maximum term identifier of the server 2 is the first identifier, it indicates that the server 2 participates in electing the server 1 as the leader and the server 2 casts a positive vote. If a local maximum version number corresponding to the first object in the server 2 is less than the first version number, the server 2 writes the first content and the first version number based on the received write command 1.

### Case 2: The first role is the semi-leader.

In another implementation, that the server in the replication group writes the first content of the first object and the first version number when the local maximum term identifier is the first identifier and the local maximum version number corresponding to the first object is less than the first version number includes: If the server in the replication group receives the write command 1 after a waiting duration starting from time when the server 1 serves as the semi-leader, the server writes the first content of the first object and the first version number when the local maximum term identifier is the first identifier and the local maximum version number corresponding to the first object is less than the first version number, where the waiting duration is greater than a maximum duration in which a server serving as a leader is allowed to retry heartbeat communication.

For example, it is assumed that each server in the replication group may broadcast heartbeat information to another server once at a fixed interval (for example, a duration T) to exchange respective local maximum term identifiers. In each time of heartbeat communication, if a server receives heartbeat information sent by more than half of the servers in the replication group, the server determines that this heartbeat succeeds; or if a server does not receive heartbeat information sent by more than half of the servers in the replication group, the server determines that this heartbeat fails. Therefore, it is assumed that a heartbeat failure occurs on a server. If the server is allowed to attempt to perform heartbeat for a maximum of M times, a maximum duration in which the server is allowed to retry heartbeat communication is M*T. Therefore, a maximum duration in which the server that serves as the leader is allowed to retry heartbeat communication is also M*T, where M is an integer greater than 1.

It may be understood that the server that serves as the leader may detect, through heartbeat broadcast, whether the server is invalid. For example, if the server that serves as the leader fails to perform heartbeat for M consecutive times, the server that serves as the leader may mark the server as invalid. In embodiments of this application, if the server is marked as invalid, the server rejects a read command from any client, and enables a read service only after the server successfully performs heartbeat.

Herein, the first role being the semi-leader means that the server 1 in the replication group detects that the server that serves as the leader is faulty, and the server 1 initiates a new election, so that a consensus that the server 1 serves as a second role is reached in the replication group, and the second role is the semi-leader. The replication status of the replication group is switched from the first state corresponding to the original leader to the second state corresponding to the current semi-leader. A new term identifier (namely, the first identifier) is generated due to the consensus. For the client, the client may not be able to query the replication group in time to obtain the first identifier. Therefore, the client cannot perceive that switching from the leader to the semi-leader currently occurs in the replication group. To prevent the client from reading expired content of an object based on an expired term identifier (namely, a term identifier corresponding to the server that originally serves as the leader in the replication group), the condition that "if the server in the replication group receives the write command 1 after a waiting duration starting from time when the server 1 serves as the semi-leader" is used to limit servers in the replication group that reach the consensus that the server 1 serves as the semi-leader to enable the write service only after a waiting duration starting from time when local maximum term identifiers are the first identifier. The waiting duration is sufficient for the server that serves as the leader to find that the server is invalid. Therefore, when new data of a target object is written into the replication group, and the client uses an expired term identifier to read the target object from the replication group, the server that has marked as invalid rejects reading of the client for the target object, thereby avoiding that the client reads expired content of the target object.

In some possible embodiments, regardless of whether the first role is the leader or the semi-leader, a server may alternatively reject the write command 1.

In a specific implementation, the first role is the leader, or the first role is the semi-leader and a server in the replication group receives the write command 1 after the waiting duration starting from the time when the server 1 serves as the semi-leader. In this case, if a local maximum term identifier of the server is the first identifier but a local maximum version number of the server is greater than or equal to the first version number, the server sends second information to the client 1, where the second information indicates rejection of the write command 1, and the second information includes the local maximum version number corresponding to the first object in the server.

In a specific implementation, the first role is the leader, or the first role is the semi-leader and a server in the replication group receives the write command 1 after the waiting duration starting from the time when the server 1 serves as the semi-leader. In this case, if a local maximum term identifier of the server is not the first identifier, it indicates that the server does not participate in electing the server 1 as the leader that is initiated by the server 1, and also means that the server does not belong to servers that reach the consensus that the server 1 serves as the leader in the replication group. In this case, the server sends third information to the client 1, where the third information indicates rejection of the write command 1, and the third information includes the local maximum term identifier of the server.

In another specific implementation, the first role is the semi-leader. However, for a server in the replication group, if a time interval between a time point when the server 1 starts to serve as the semi-leader and a time point when the server 1 receives the write command 1 is less than the maximum duration in which the server that serves as the leader is allowed to retry heartbeat communication, the server replies to the client 1 with rejection of the write command 1.

In embodiments of this application, after writing the first content of the first object and the first version, a server further records that a status of the first content of the first object corresponding to the first version number is a ready state. For example, the server 1 recording the status of the first content of the first object corresponding to the first version number as the "ready" state means that the current first content of the first object can be rolled back or committed.

In some possible embodiments, the server may receive a plurality of write commands from different clients for a same object. It is assumed that term identifiers carried in the plurality of write commands each are the first identifier, but to-be-written content of the first object is different and to-be-written version numbers are different. In this case, if the server first receives a write command corresponding to a maximum version number in the plurality of write commands and performs writing based on the write command, the server rejects another write command in the plurality of write commands. In this way, a version number is used to resolve a concurrent conflict caused by writing of different clients for a same object.

S203: When receiving the first information sent by more than half of the servers in the replication group, including the server 1, the client 1 broadcasts a commit command, where the commit command indicates to update a status of the first content corresponding to the first version number to a committed state.

In embodiments of this application, when the client 1 receives, from a majority (including the server 1) of the servers in the replication group, replies indicating that the write is accepted, the client 1 determines that this write indicated by the write command 1 can succeed. Therefore, the client 1 broadcasts the commit command. Herein, the client 1 may end the write process without waiting for a reply to the commit command from a server in the replication group. Correspondingly, servers in the replication group receive the commit command, and the server that has written the first version number and the first content of the first object and that is in the replication group updates the status of the first content of the first object corresponding to the first version to the committed state.

For example, if the server 1 records the status of the first content of the first object corresponding to the first version number as a "committed" state, it means that the first content of the first object is currently readable.

In some possible embodiments, the client 1 does not receive the first information sent by more than half of the servers in the replication group, including the server 1, but the client 1 receives the second information sent by more than half of the servers in the replication group. For the second information, refer to the descriptions of the "second information" in S202. In this case, the client 1 determines that this write indicated by the write command 1 fails, and the client 1 broadcasts a write command 2, where the write command 2 includes the first identifier, the to-be-written first content of the first object, and a to-be-written second version number, and the second version number is greater than the maximum version number corresponding to the first object in the second information received by the client 1. It may be understood that the second version number is greater than the first version number.

It can be learned that, in embodiments of this application, regardless of whether the replication group is currently in a replication state corresponding to a leader or a replication state corresponding to a semi-leader, in the write process, content of an object is written into the replication group in a "majority write" manner. To be specific, the client broadcasts a write command, and each server in the replication group may directly respond to the client after determining, locally, whether a write condition is satisfied when the server receives the write command. When the client receives, from the majority of the servers in the replication group, replies indicating that the write is accepted, the client determines that this write can be completed. In comparison with performing a write operation according to a primary/standby replication protocol or an existing Paxos protocol or Raft protocol, this manner can reduce a write operation latency. In addition, in comparison with the primary/standby replication protocol, this application further provides a fault tolerance rate to some extent. For example, when less than half of the servers in the replication group are faulty, services can still continue to be provided for the client. In comparison with the existing Paxos protocol or Raft protocol, in this application, there is no need to determine a globally unique write sequence before data is written. Therefore, a write amplification problem caused by object writing is resolved.

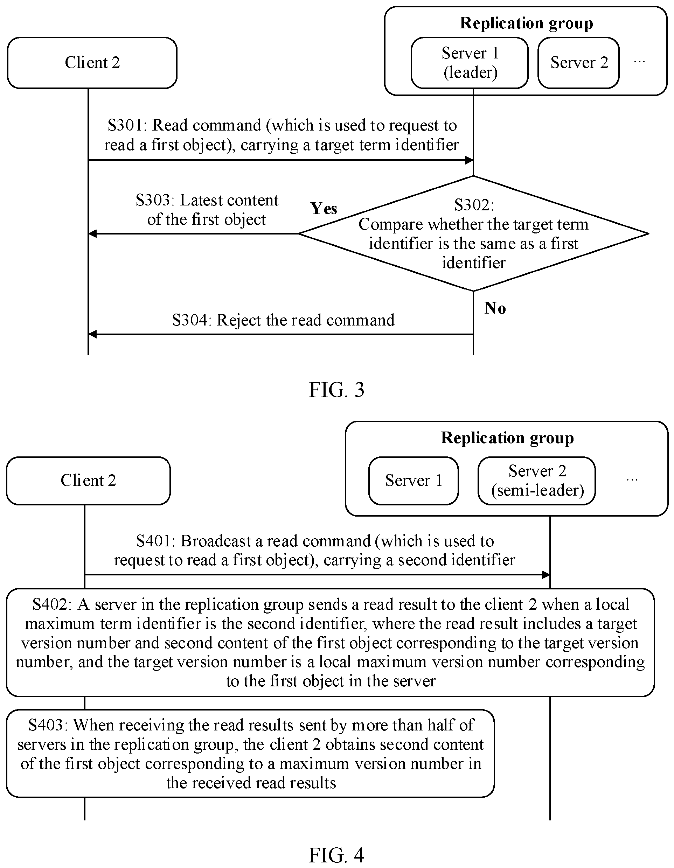

Based on embodiments of FIG. 2, it is assumed that the first role is the leader, that is, the server 1 in the replication group serves as the leader. When the server 1 is not faulty, a "leader read" mode is used in the read process. For details, refer to descriptions in embodiments of FIG. 3.

Refer to FIG. 3. FIG. 3 is a flowchart of a data reading method according to an embodiment of this application. The method may be applied to the data processing system shown in FIG. 1. In comparison with the data processing system described in embodiments of FIG. 2, the data processing system further includes a client 2. The client 2 is different from the client 1, and a server 1 in a replication group serves as a leader. The method includes but is not limited to the following steps.

S301: The client 2 sends a read command to the server 1 in the replication group, where the read command includes a target term identifier, and the read command is used to request to read a first object.

Herein, the target term identifier is obtained by the client 2 by querying the replication group before the client 2 sends the read command. For a process of obtaining the target term identifier, refer to the foregoing descriptions of obtaining the term identifier. Details are not described herein again.

S302: The server 1 compares whether the target term identifier is the same as a first identifier.

For example, when the target term identifier is the same as the first identifier, the server 1 performs S303; or when the target term identifier is different from the first identifier, the server 1 performs S304.

Herein, that the target term identifier is different from the first identifier may indicate that the target term identifier is less than the first identifier, that is, it indicates that the target term identifier has expired, and a consensus that the server 1 serves as the leader is reached in the replication group through a new election during a period since the client obtains the target term identifier. Local maximum term identifiers in a majority of servers in the replication group are the first identifier. In this case, the client re-queries the replication group to obtain the first identifier, and sends a read command to the server 1 based on the first identifier.

S303: The server 1 sends latest content of the first object to the client 2.

Herein, when the target term identifier is equal to the first identifier, the server 1 sends the latest content of the first object to the client 2.

For example, after the first content of the first object and the first version number are successfully written into the replication group based on embodiments of FIG. 2, and before the client 1 reads the first object from the server 1, no other content of the first object is written into the replication group. In this case, the latest content of the first object sent by the server 1 to the client 2 is the first content.

In this case, that the server 1 sends the first content of the first object to the client 2 includes: After the server 1 updates, based on a commit command, a status of the first content of the first object corresponding to the first version number to a committed state, the server 1 sends the first content of the first object to the client 2. Herein, for the commit command, refer to the descriptions of the corresponding content in S203 in embodiments of FIG. 2. Details are not described herein again.

For example, after the first content of the first object and the first version number are successfully written into the replication group based on embodiments of FIG. 2, and before the client 1 reads the first object from the server 1, for the first object, only another client successfully writes third content of the first object and a corresponding version number into the replication group. In this case, the latest content of the first object sent by the server 1 to the client 2 is the third content.

S304: The server 1 replies to the client 2 with rejection of the read command.

In an implementation, when the target term identifier is less than the first identifier, the server 1 replies to the client 2 with the rejection of the read command.

In some possible embodiments, when any one of the following conditions is satisfied, the server 1 also replies to the client 2 with the rejection of the read command:
Condition 1: Before the server 1 receives the read command sent by the client 2, the server 1 fails to retry heartbeat communication within a preset duration.
Condition 2: Before the server 1 receives the read command sent by the client 2, the server 1 determines, based on heartbeat information sent by the server 2 in the replication group, that the first identifier is invalid, where the heartbeat information sent by the server 2 includes a local maximum term identifier of the server 2, and the local maximum term identifier of the server 2 is greater than the first identifier.

For the condition 1, the preset duration is, for example, a maximum duration in which the server is allowed to retry heartbeat communication. In other words, when the server 1 detects that the server 1 fails to retry heartbeat communication, the server 1 rejects to provide a read service to the client. In this case, when the server 1 detects that the server 1 fails to retry heartbeat communication, the server 1 may locally mark the server 1 as invalid. It may be understood that, if the server 1 fails to retry heartbeat communication within the preset duration, it indicates that there is a high probability that a fault of the server 1 cannot be rectified. In this case, the server 1 marks the server 1 as invalid in time and rejects to provide the read service externally, to prevent the client from reading expired data.

For the condition 2, the server 1 may attempt and successfully performs heartbeat communication within the preset duration after the server 1 is faulty. However, during this period, when a server (for example, the server 2) in the replication group detects that the server 1 is faulty (for example, the server does not receive heartbeat information from the server 1), the server initiates a new election for electing the server 2 as a semi-leader, a consensus that the server 2 serves as the semi-leader is reached in the replication group, and a new term identifier is generated. Because the server 1 attempts and successfully performs heartbeat communication, the server 1 may receive the heartbeat information sent by the server 2, and the server 1 determines, based on the heartbeat information, that the local first identifier is invalid. In this case, the server 1 may locally mark the server 1 as invalid. In this way, the server 1 marks the server 1 as invalid in time and rejects to provide the read service externally, to prevent the client from reading expired data.

Under the condition 2, in S301, when the server 1 compares whether the target term identifier is the same as the first identifier, the target term identifier may be greater than the first identifier, or the target term identifier may be equal to the first identifier, or the target term identifier may be less than the first identifier. In this case, the server 1 replies to the client 2 with the rejection of the read command.

In some possible embodiments, a first role is a leader. After the server 1 in the replication group is faulty, local maximum term identifiers in more than half of the servers in the replication group are a second identifier, the second identifier is greater than the first identifier, and the second identifier indicates that the consensus that the server 2 serves as the semi-leader is reached in the replication group. In this scenario, the following implementations are provided.

In an implementation, before the client 2 reads the first object, the client 2 obtains the second identifier in time based on the foregoing mechanism of periodically querying the replication group, and learns that a current replication state of the replication group is a replication state corresponding to the semi-leader. In this case, a read process is switched from a "leader read" mode to a "majority read" mode. For a process in which the client 2 reads the first object in the "majority read" mode, refer to the following descriptions in embodiments of FIG. 4. Details are not described herein.

In another implementation, if the client 2 does not obtain the second identifier from the replication group in time before reading the first object, that is, the client 2 does not perceive a change of a replication state of the replication group, the client 2 still sends a read command 1 to the server 1, where the read command 1 is used to request to read the first object, and a target term identifier carried in the read command 1 is the first identifier. Correspondingly, when the client 2 receives the rejection of the read command 1 replied with by the server 1, the client 2 is triggered to obtain the second identifier from the replication group, so that the client 2 can read the first object in the "majority read" mode based on the second identifier.

It can be learned that, when a server that serves as a leader in the replication group is not faulty, because the server is a server that stores latest-version data of all objects and that is in the replication group, the client directly requests the leader to read a target object in the "leader read" mode, and may obtain latest content of the target object.

Based on embodiments of FIG. 2, it is assumed that the first role is the leader, that is, the server 1 in the replication group serves as the leader. When the server 1 is faulty, local maximum term identifiers in more than half of the servers in the replication group are the second identifier. The second identifier is greater than the first identifier. The second identifier indicates that the consensus that the server 2 serves as the semi-leader is reached in the replication group. In this case, the read process uses the "majority read" mode. For details, refer to descriptions in embodiments of FIG. 4.

Refer to FIG. 4. FIG. 4 is a flowchart of another data reading method according to an embodiment of this application. The method may be applied to the data processing system shown in FIG. 1. The data processing system includes a client 2, and a server 2 in a replication group serves as a semi-leader. The method includes but is not limited to the following steps.

S401: The client 2 broadcasts a read command, where the read command is used to request to read a first object, and the read command carries a second identifier.

For example, before the client 2 broadcasts the read command, the client 2 obtains the second identifier by querying the replication group and determines that the server 2 is a server that serves as the semi-leader in the replication group. In this way, the client 2 learns that a current replication state of the replication group is a replication state corresponding to the semi-leader. Therefore, the client 2 reads the object in the "majority read" mode.

S402: When a local maximum term identifier is the second identifier, a server in the replication group sends a read result to the client 2, where the read result includes a target version number and second content of the first object corresponding to the target version number, and the target version number is a local maximum version number corresponding to the first object in the server.

It may be understood that the local maximum term identifier of the server in the replication group being the second identifier means that the server participates in an election of electing the server 2 as the semi-leader and casts a positive vote. The server belongs to servers that reach a consensus that the server 2 serves as the semi-leader in the replication group.

In some possible embodiments, when the local maximum term identifier of the server in the replication group is not the second identifier, the server replies to the client 2 with rejection of the read command.

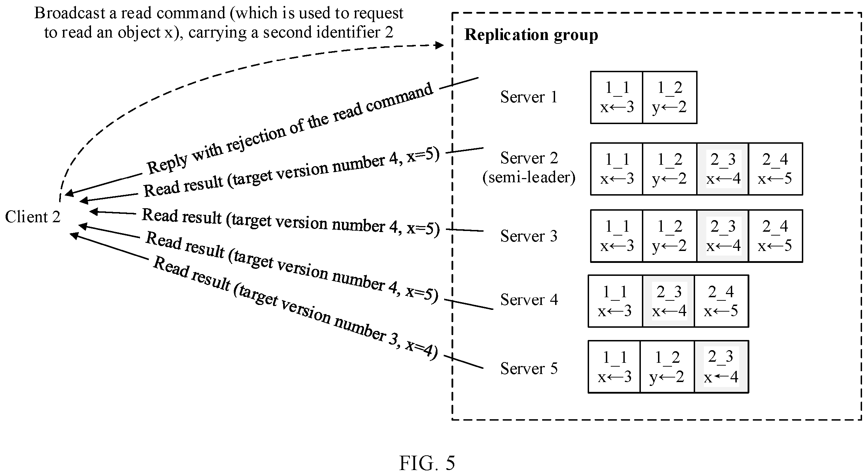

Refer to FIG. 5. FIG. 5 is a diagram of an application scenario according to an embodiment of this application. In FIG. 5, there are five servers in the replication group, which are respectively a server 1, a server 2, a server 3, a server 4, and a server 5. The server 2 serves as a semi-leader. A rectangular box listed behind each server in FIG. 5 shows a write status of a local object in the server. Using content "2_4, x←5" in a last rectangular box of the server 2 as an example, "2_4, x←5" indicates that content "5" of an object x corresponding to a version number "4" is written when a term identifier is "2".

It can be learned from FIG. 5 that a local maximum term identifier of the server 1 is 1, and local maximum term identifiers of the server 2, the server 3, the server 4, and the server 5 are all 2. It can be further learned from FIG. 5 that, in a period in which the term identifier is 1, two writes are performed in total, that is, "x=3" and "y=2" are written in sequence; and in a period in which the term identifier is 2, two writes are performed in total, that is, "x=4" and "y=5" are written in sequence. In addition, it can be further learned from FIG. 5 that, latest content of the object x currently stored in the server 1 is 3, and latest content of an object y currently stored in the server 1 is 2; latest content of the object x currently stored locally in both the server 2 and the server 3 is 5, and latest content of the object y currently stored locally in both the server 2 and the server 3 is 2; the server 4 currently stores only the object x, and latest content of the object x is 5; and latest content of the object x currently stored in the server 5 is 4, and latest content of the object y currently stored in the server 5 is 2. In addition, it can be learned from FIG. 5 that, each time content of an object is written, more than half of the servers in the replication group successfully write the content of the object locally.

In FIG. 5, a client 2 first broadcasts a read command, where the read command is used to request to read the object x (namely, the first object), and a second identifier carried in the read command is 2. After receiving the read command, the servers in the replication group compare local maximum term identifiers with the second identifier. Replies of the servers in the replication group are described below.
(1) A local maximum term identifier of the server 1 is 1 and is less than the second identifier. Therefore, the server 1 replies to the client 2 with rejection of the read command.
(2) A local maximum term identifier of the server 2 is 2, and a local maximum version number corresponding to the object x is 4. Therefore, the server 2 sends a read result to the client 2, where a target version number carried in the read result is 4, and content of x corresponding to the target version number is 5.
(3) A local maximum term identifier of the server 3 is 2, and a local maximum version number corresponding to the object x is 4. Therefore, the server 3 sends a read result to the client 2, where a target version number carried in the read result is 4, and content of x corresponding to the target version number is 5.
(4) A local maximum term identifier of the server 4 is 2, and a local maximum version number corresponding to the object x is 4. Therefore, the server 4 sends a read result to the client 2, where a target version number carried in the read result is 4, and content of x corresponding to the target version number is 5.
(5) A local maximum term identifier of the server 5 is 2, and a local maximum version number corresponding to the object x is 3. Therefore, the server 3 sends a read result to the client 2, where a target version number carried in the read result is 3, and content of x corresponding to the target version number is 4.

Herein, FIG. 5 is merely used as an example. FIG. 5 is merely used to clearly present a write status of a local object in a server in the replication group, and does not limit a storage form and storage content of local data of the server to those only shown in FIG. 5.

S403: When receiving the read results sent by more than half of the servers in the replication group, the client 2 obtains the second content of the first object corresponding to a maximum version number from the received read results.

It can be learned from the descriptions of FIG. 5 in S402 that, the client 2 receives the read results sent by the more than half of the servers in the replication group, and a maximum target version number in the read results received by the client 2 is 4, and content of the object x corresponding to the version number "4" is "5". Therefore, the maximum version number obtained by the client 2 from the received read results is 4, and content of the object x corresponding to the version number is "5".

It can be learned from embodiments of FIG. 2 that, regardless of whether the replication group is currently in the replication state corresponding to the leader or the replication state corresponding to the semi-leader, in the write process, the content of the object is written into the replication group in a "majority write" manner. Therefore, after a consensus that a server serves as a semi-leader is reached in the replication group, the client reads a target object from the replication group in a "majority read" mode. Because there is definitely an intersection between servers participating in writing latest content of the target object and servers feeding back read results (that is, there is at least one same server), it can be ensured that the client definitely reads the latest content of the target object.

The following describes a process of electing a semi-leader in a replication group by using a specific example.

In an implementation, a server 1 in the replication group serves as a leader and a corresponding term identifier is an identifier 1. A server in the replication group detects, based on the foregoing heartbeat detection mechanism, whether another server in the replication group is online. It is assumed that a server 2 in the replication group does not receive heartbeat information sent by the server 1. The server 2 considers that the server 1 is faulty. Therefore, the server 2 initiates an election request, where the election request is used to request to elect the server 2 as a semi-leader. If more than half of servers in the replication group agree to the election request, a consensus that the server 2 serves as the semi-leader is reached in the replication group, and a corresponding term identifier is an identifier 2, where the identifier 2 is greater than the identifier 1. Herein, the server 2 may be any currently online server other than the server 1 in the replication group, and "currently online" means that heartbeat communication of the server 2 is normal.

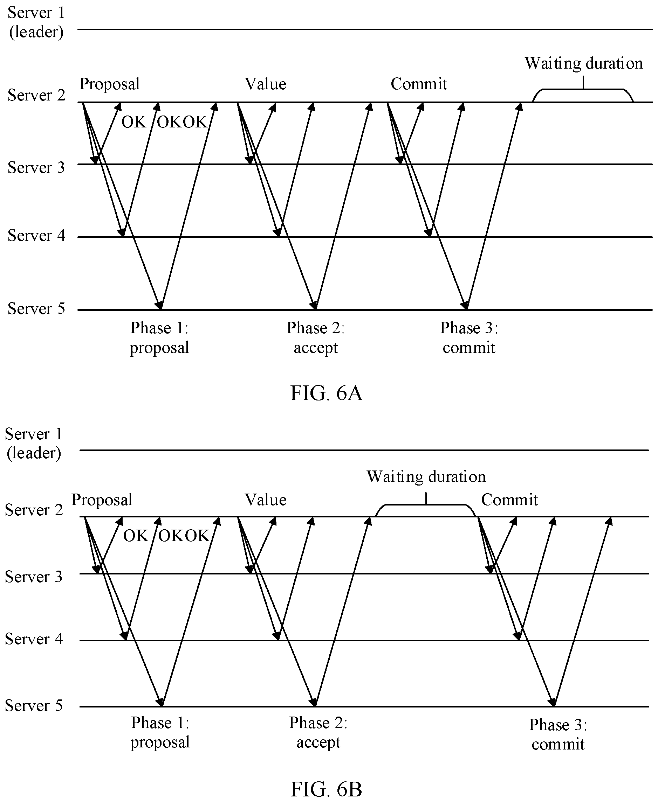

Refer to FIG. 6A. FIG. 6A is a diagram of a process in which the replication group runs a Paxos protocol to elect a semi-leader according to an embodiment of this application. In FIG. 6A, it is assumed that the server 2 does not detect the heartbeat information of the server 1, and a largest slot ID of a non-empty slot (that is, in which a consensus value is stored) in a log locally maintained by the server 2 is 1, that is, a term identifier is 1. However, the consensus value that is stored in the slot in the log and that corresponds to the term identifier 1 records an identifier of the server 1 and a replication status being a first state corresponding to a leader. Therefore, the server 2 creates a slot ID "2" in the local log. In a phase 1, a proposal (proposal) is broadcast, where the proposal carries a term identifier (namely, the slot ID "2") and a proposal number of the proposal. It can be learned from FIG. 6A that more than half of servers (namely, the server 1, a server 3, a server 4, and a server 5) in the replication group agree to the proposal and do not return a consensus value. In a phase 2, the server 2 broadcasts a consensus value A, where the consensus value A records an identifier of the server 2 and a second state corresponding to the semi-leader. It can be learned from FIG. 6A that more than half of the servers in the replication group agree to accept the consensus value A. In a phase 3, the server 2 broadcasts proposal commit information and stores the consensus value A at the slot ID "2" of the local log. After the server 3, the server 4, and the server 5 receive the proposal commit information, the server 3, the server 4, and the server 5 each store the consensus value A at a slot ID "2" of a local log and reply to the server 2. It can be learned that local maximum term identifiers in the server 1, the server 3, the server 4, and the server 5 in the replication group are "2".

In some possible embodiments, in the foregoing phase 1, if a server responds to the proposal of the server 2 and returns a consensus value B, the server 2 stores the consensus value B at the slot ID "2" of the local log, creates a slot ID "3" in the log, and re-broadcasts a new proposal, where a term identifier carried in the proposal is the slot ID "3" and the proposal further carries a new proposal number. If more than half of the servers in the replication group agree to the proposal and do not return a consensus value, the server 2 broadcasts the consensus value A.

Herein, the descriptions of FIG. 6A are merely an example for brief description, and are not complete descriptions of the Paxos protocol. This should not constitute a limitation on the descriptions of the process in which the replication group runs the Paxos protocol to elect the semi-leader.

For example, in the Paxos protocol, a start moment of the waiting duration in "after the waiting duration starting from the time when the server serves as the semi-leader" may be an end moment of the phase 3 in FIG. 6A. In this way, an existing consensus protocol (for example, the Paxos protocol) does not need to be modified. It is only required that the servers in the replication group that reach a consensus that the server 2 serves as the semi-leader provide a write service after a waiting duration starting from time when the server 2 serves as the semi-leader, so that the client can be prevented from reading expired content of the target object based on an expired term identifier.

In some possible embodiments, the existing Paxos protocol may alternatively be modified, that is, the waiting duration is set in the election process. Refer to FIG. 6B. FIG. 6B is a diagram of another process in which the replication group runs a Paxos protocol to elect a semi-leader according to an embodiment of this application. A difference from FIG. 6A is that after the phase 2 ends, the server 2 enters the phase 3 after one waiting duration. In this way, when the term identifier "2" takes effect after the phase 3 ends, the server 1 has already marked the server 1 as invalid. After another client writes new content of the target object into the replication group based on the new term identifier "2", if a client does not obtain the term identifier "2" from the replication group in time, the client cannot read data from the server 1 based on an expired term identifier "1", so that the client can be prevented from reading expired data.

It may be understood that, in the scenario shown in FIG. 6B, after the phase 3 shown in FIG. 6B is completed, a server that is in the replication group that reaches a consensus that the server 2 serves as the semi-leader in the current election may provide a write service externally. To be specific, when the server receives a write command from the client for the first object, if a term identifier carried in the write command is a local maximum term identifier of the server and a version number carried in the write command is greater than a local maximum version number corresponding to the first object in the server, the server writes content of the first object carried in the write command and the version number carried in the write command. In this case, for an occasion at which the server in the replication group can accept a write operation, the server does not need to be restricted to process a received write command only after the waiting duration starting from time when the server 2 in the replication group serves as the semi-leader.

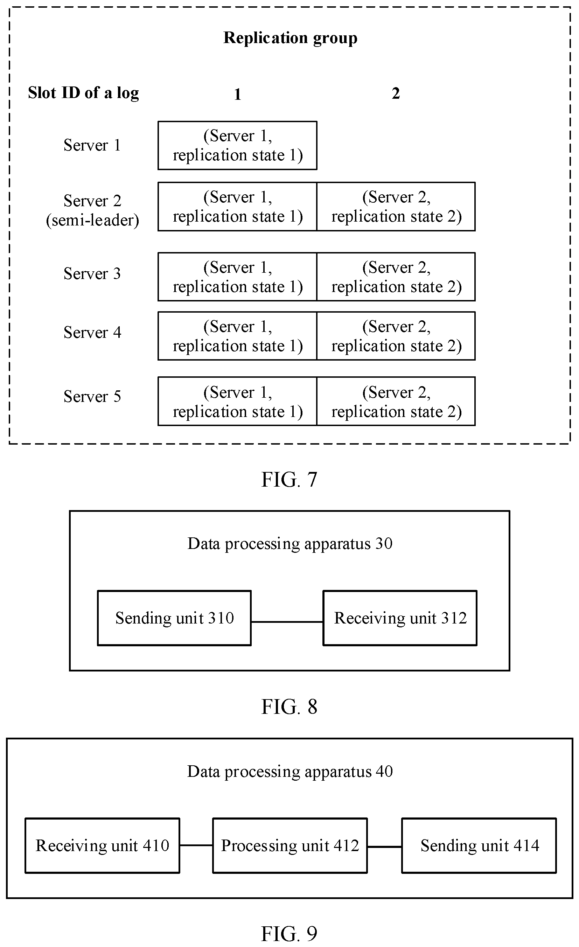

With reference to the foregoing descriptions in FIG. 5 and FIG. 6A, after the consensus that the server 2 serves as the semi-leader is reached in the replication group, switching from the leader to the semi-leader is completed in the replication group. In this case, a log locally maintained by each server in the replication group may be shown in FIG. 7. FIG. 7 is a diagram of a log that is locally used by each server in the replication group to store a consensus value according to an embodiment of this application. In FIG. 5, the content of the object is written locally in the server 1 only at the term identifier "1", and the content of the object is written in servers other than the server 1 in the replication group at both the term identifier "1" and the term identifier "2". Therefore, in FIG. 7, a local log of the server 1 includes only one log entry of a slot ID "1", and the slot ID "1" stores a consensus value, where the consensus value records the identifier of the server 1 and a replication status 1 being the first state corresponding to the leader. Local logs of the server 2, the server 3, the server 4, and the server 5 in the replication group each include two log entries: a slot ID "1" and a slot ID "2". A consensus value stored in the slot ID "1" records the identifier of the server 1 and the replication status 1 being the first state corresponding to the leader, and a consensus value stored in the slot ID "2" records the identifier of the server 2 and a replication status 2 being the second state corresponding to the semi-leader.

In some possible embodiments, after the server 2 serves as the semi-leader, the server 2 may further communicate with other clients in the replication group, to interactively check missed latest content of data objects and version numbers corresponding to the latest content of the data objects. In this way, the server 2 may obtain, from the other servers in the replication group, the currently missed latest content of the data objects and the version numbers corresponding to the latest content of the data objects. When the server 2 determines that the server 2 is a server that currently stores latest-version data of all objects, the server 2 may broadcast an election request, where the election request is used to request to elect the server 2 as a leader. After a consensus that the server 2 serves as the leader is reached in the replication group through the election, the replication status of the replication group is switched from the second state corresponding to the semi-leader to the first state corresponding to the semi-leader.

For example, it can be learned from FIG. 5 that all objects currently stored in the replication group include the object x and the object y. The server 2 determines, by interacting with another online server in the replication group, that the server 2 currently stores the latest-version data of all objects. Therefore, the server 2 may initiate a new election request to request to elect the server 2 as the leader.

In some possible embodiments, in addition to the foregoing case in which the replication group needs to run the consensus protocol because the server that serves as the leader in the replication group goes offline due to a fault, the replication group also needs to run the consensus protocol when a quantity of servers in the replication group changes because a server is added to the replication group, so that each server has a consistent view of the current servers in the replication group, thereby ensuring that a provided service can be correctly and consistently executed.

Refer to FIG. 8. FIG. 8 is a diagram of a structure of a data processing apparatus according to an embodiment of this application. The data processing apparatus 30 includes a sending unit 310 and a receiving unit 312. The data processing apparatus 30 may be implemented by using hardware, software, or a combination of software and hardware.

In an example, the data processing apparatus 30 may be any one of the foregoing clients or included in the client.

For example, when a write process is performed, the sending unit 310 is configured to broadcast a write command, where the write command includes a first identifier, to-be-written first content of a first object, and a to-be-written first version number, the first identifier is a local maximum term identifier of more than half of servers in a replication group, and the first identifier indicates that a consensus that a first server in the replication group serves as a first role is reached in the replication group. The sending unit 310 is further configured to broadcast a commit command when the receiving unit 312 receives first information sent by more than half of the servers in the replication group, where the first information indicates agreement to the write command, and the commit command indicates to update a status of the first content corresponding to the first version number to a committed state.

The data processing apparatus 30 may be configured to implement the method on the client 1 side described in embodiments of FIG. 2. In embodiments of FIG. 2, the sending unit 310 may be configured to perform S201 and S203, and the receiving unit 312 may be configured to perform S203.

In some possible embodiments, the data processing apparatus 30 may further perform a read process. In this case, the data processing apparatus 30 may be further configured to implement the method on the client 2 side described in embodiments of FIG. 3 or the method on the client 2 side described in embodiments of FIG. 4. For example, in embodiments of FIG. 3, the sending unit 310 may be configured to perform S301, and the receiving unit 312 may be configured to perform S303 and S304. For another example, in embodiments of FIG. 4, the sending unit 310 may be configured to perform S401, and the receiving unit 312 may be configured to perform S402 and S403.

Refer to FIG. 9. FIG. 9 is a diagram of a structure of another data processing apparatus according to an embodiment of this application. The data processing apparatus 40 includes a receiving unit 410, a processing unit 412, and a sending unit 414. The apparatus 40 may be implemented by using hardware, software, or a combination of software and hardware.

For example, when a write process is performed, the receiving unit 410 is configured to receive a write command, where the write command is transmitted in a broadcast manner, the write command includes a first identifier, to-be-written first content of a first object, and a to-be-written first version number, and the first identifier indicates that a consensus that a first server in a replication group serves as a first role is reached in the replication group. The processing unit 412 is configured to: when a local maximum term identifier is the first identifier and a local maximum version number corresponding to the first object is less than the first version number, write the first content and the first version number, and send first information through the sending unit 414, where the first information indicates agreement to the write command.

The data processing apparatus 40 may be configured to implement the method on the server side described in embodiments of FIG. 2. In embodiments of FIG. 2, the receiving unit 410 may be configured to perform S201 and S203, the processing unit 412 may be configured to perform S202, and the sending unit 414 may be configured to perform S202.

In some possible embodiments, the data processing apparatus 40 may further perform a read process. In this case, the data processing apparatus 40 may be further configured to implement the method on the server 1 side described in embodiments of FIG. 3 or the method on the server side described in embodiments of FIG. 4. For example, in embodiments of FIG. 3, the receiving unit 410 may be configured to perform S301, the processing unit 412 may be configured to perform S302, and the sending unit 414 may be configured to perform S303 and S304. For another example, in embodiments of FIG. 4, the receiving unit 410 may be configured to perform S401, and the processing unit 412 and the sending unit 414 may be configured to perform S402.

One or more of the units in embodiments shown in FIG. 8 or FIG. 9 may be implemented by software, hardware, firmware, or a combination thereof. The software or firmware includes but is not limited to computer program instructions or code, and may be executed by a hardware processor. The hardware includes but is not limited to various integrated circuits, such as a central processing unit (central processing unit, CPU), a digital signal processor (digital signal processor, DSP), a field-programmable gate array (field-programmable gate array, FPGA), or an application-specific integrated circuit (application-specific integrated circuit, ASIC).

It should be understood that division into units in the apparatus (for example, the data processing apparatus 30 or the data processing apparatus 40) is merely logical function division. During actual implementation, all or some of the units may be integrated into one physical entity or may be physically separated. In addition, a unit in the apparatus may be implemented in a form of software invoked by a processor. For example, the apparatus includes the processor, the processor is connected to a memory, the memory stores instructions, and the processor invokes the instructions stored in the memory, to implement any one of the foregoing methods or to implement functions of the units in the apparatus. The processor is, for example, a general-purpose processor, for example, a central processing unit (central processing unit, CPU) or a microprocessor, and the memory is a memory in the apparatus or a memory outside the apparatus. Alternatively, a unit in the apparatus may be implemented in a form of a hardware circuit, and the hardware circuit may be designed to implement functions of some or all of the units. The hardware circuit may be understood as one or more processors. For example, in an implementation, the hardware circuit is an application-specific integrated circuit (application-specific integrated circuit, ASIC), and a logical relationship between elements in the circuit is designed to implement the functions of some or all of the units. For another example, in another implementation, the hardware circuit may be implemented by using a programmable logic device (programmable logic device, PLD). A field-programmable gate array (field-programmable gate array, FPGA) is used as an example. The field-programmable gate array may include a large quantity of logic gate circuits, and a connection relationship between the logic gate circuits is configured based on a configuration file, to implement the functions of some or all of the units. All units of the apparatus may be implemented in a form of software invoked by a processor, or all units may be implemented in a form of a hardware circuit, or some units may be implemented in a form of software invoked by a processor, and a remaining part may be implemented in a form of a hardware circuit.

In embodiments of this application, the processor is a circuit having a signal processing capability. In an implementation, the processor may be a circuit having an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function through a logical relationship of a hardware circuit. The logical relationship of the hardware circuit is fixed or may be reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

It can be learned that each unit of the foregoing apparatus may be one or more processors (or processing circuits) configured to implement the foregoing methods, for example, a CPU, a GPU, an NPU, a TPU, a DPU, a microprocessor, a DSP, an ASIC, an FPGA, or a combination of at least two of these processor forms.

In addition, all or some of the units of the apparatus may be integrated, or may be implemented independently. In an implementation, the units may be integrated together and implemented in a form of a system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

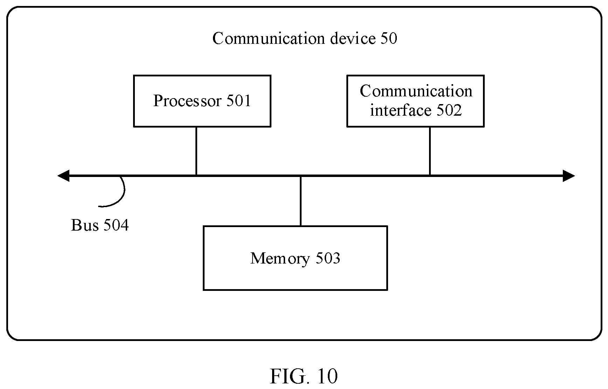

Refer to FIG. 10. FIG. 10 is a diagram of a structure of a communication device according to an embodiment of this application. As shown in FIG. 10, the communication device 50 includes a processor 501, a communication interface 502, a memory 503, and a bus 504. The processor 501, the memory 503, and the communication interface 502 communicate with each other through the bus 504. It should be understood that quantities of processors and memories in the communication device 50 are not limited in this application.

In an implementation, the communication device 50 may be the foregoing server, and the server may be a network-side device having a data processing capability. The network-side device may be, for example, a server deployed on a network side, or a component (for example, the component may be a chip or an integrated circuit) in the server. The network-side device may be deployed in a cloud environment or an edge environment. This is not specifically limited herein.

In another implementation, the communication device 50 may be the foregoing client. The client may be a terminal device. The terminal device may be, for example, user equipment (a mobile phone, a computer, a tablet computer, a palmtop computer, a desktop computer, a headset, a stereo, a wearable device, a vehicle-mounted device, a virtual reality device, an augmented reality device, or the like), a smart home device (for example, a television, a robotic vacuum cleaner, a smart desk lamp, a speaker system, an intelligent lighting system, an electrical control system, home background music, a home theater system, an intercom system, or video surveillance), a smart transportation device (for example, an automobile, a ship, an unmanned aerial vehicle, a train, a van, or a truck), or a smart manufacturing device (for example, a robot, an industrial device, smart logistics, or a smart factory), or may be a component (for example, a chip or an integrated circuit) in the terminal device.

The bus 504 may be a peripheral component interconnect (peripheral component interconnect, PCI) bus, an extended industry standard architecture (extended industry standard architecture, EISA) bus, or the like. The bus may be classified as an address bus, a data bus, a control bus, and the like. For ease of representation, the bus is represented by using only one line in FIG. 10. However, this does not indicate that there is only one bus or only one type of bus. The bus 504 may include a path for information transmission between various components (for example, the memory 503, the processor 501, and the communication interface 502) of the communication device 50.

For details of the processor 501, refer to the related descriptions of the processor in the foregoing embodiments. Details are not described herein again.

The memory 503 is configured to provide storage space, and the storage space may store data such as an operating system and a computer program. The memory 503 may be one or a combination of a random access memory (random access memory, RAM), an erasable programmable read only memory (erasable programmable read only memory, EPROM), a read-only memory (read-only memory, ROM), a compact disc read-only memory (compact disc read-only memory, CD-ROM), or the like. The memory 503 may exist independently, or may be integrated into the processor 501.

The communication interface 502 may be configured to provide an information input or output for the processor 501. Alternatively, the communication interface 502 may be configured to receive data sent externally and/or send data to the outside, and may be a wired link interface including, for example, an Ethernet cable, or may be a wireless link (for example, Wi-Fi, Bluetooth, or universal wireless transmission) interface. Alternatively, the communication interface 502 may further include a transmitter (for example, a radio frequency transmitter or an antenna), a receiver, or the like coupled to the interface.

The processor 501 in the communication device 50 is configured to read the computer program stored in the memory 503, and is configured to perform the foregoing method, for example, the method described in FIG. 2, FIG. 3, or FIG. 4.

In a possible design, the communication device 50 may be one or more modules in an execution body (for example, the client 1) for performing the method shown in FIG. 2, and the processor 501 may be configured to read one or more computer programs stored in the memory, to perform the following operations.

The sending unit 310 is configured to broadcast a write command, where the write command includes a first identifier, to-be-written first content of a first object, and a to-be-written first version number, the first identifier is a local maximum term identifier of more than half of servers in a replication group, and the first identifier indicates that a consensus that a first server in the replication group serves as a first role is reached in the replication group.

When the receiving unit 312 receives first information sent by more than half of the servers in the replication group, the sending unit 310 broadcasts a commit command, where the first information indicates agreement to the write command, and the commit command indicates to update a status of the first content corresponding to the first version number to a committed state.

In a possible design, the communication device 50 may be one or more modules in an execution body (for example, the server) for performing the method shown in FIG. 2, and the processor 501 may be configured to read one or more computer programs stored in the memory, to perform the following operations.

The receiving unit 410 receives a write command, where the write command is transmitted in a broadcast manner, the write command includes a first identifier, to-be-written first content of a first object, and a to-be-written first version number, and the first identifier indicates that a consensus that a first server in a replication group serves as a first role is reached in the replication group.

When it is determined that a local maximum term identifier is the first identifier and a local maximum version number corresponding to the first object is less than the first version number, the first content and the first version number are written, and first information is sent by the sending unit 414, where the first information indicates agreement to the write command.

In the foregoing embodiments in this specification, the descriptions of each embodiment have respective focuses. For a part that is not described in detail in an embodiment, refer to related descriptions in another embodiment. In addition, in embodiments of this application, unless otherwise specified or there is a logic conflict, terms and/or descriptions in embodiments are consistent and may be mutually referenced, and technical features in different embodiments may be combined based on an internal logical relationship thereof, to form a new embodiment.

It should be noted that, a person of ordinary skill in the art may understand that, all or some of the steps of the methods in the foregoing embodiments may be implemented by a program instructing related hardware. The program may be stored in a computer-readable storage medium. The storage medium includes a read-only memory (read-only memory, ROM), a random access memory (random access memory, RAM), a programmable read-only memory (programmable read-only memory, PROM), an erasable programmable read-only memory (erasable programmable read-only memory, EPROM), a one-time programmable read-only memory (one-time programmable read-only memory, OTPROM), an electrically-erasable programmable read-only memory (electrically-erasable programmable read-only memory, EEPROM), a compact disc read-only memory (compact disc read-only memory, CD-ROM), or another optical disk memory, a magnetic disk memory, a magnetic tape memory, or any other computer-readable medium that can be configured to carry or store data.

The technical solutions of this application essentially, or the contributing part, or all or some of the technical solutions may be implemented in a form of a software product. The computer program product is stored in a storage medium and includes several instructions for enabling a device (which may be a personal computer, a server, a network device, a robot, a single-chip microcomputer, a chip, a robot, or the like) to perform all or some of the steps of the methods described in embodiments of this application.

## Claims

1. A data processing method, wherein the method is applied to a data processing system, the data processing system comprises a first client and a replication group, local maximum term identifiers in more than half of servers in the replication group are a first identifier, the first identifier indicates that a consensus that a first server in the replication group serves as a first role is reached in the replication group, and the method comprises:
broadcasting, by the first client, a first write command, wherein the first write command comprises the first identifier, to-be-written first content of a first object, and a to-be-written first version number;
when a local maximum term identifier is the first identifier and a local maximum version number corresponding to the first object is less than the first version number, writing, by a server in the replication group, the first content and the first version number locally, and sending first information to the first client, wherein the first information indicates agreement to the first write command; and
when receiving the first information sent by more than half of the servers in the replication group, comprising the first server, broadcasting, by the first client, a commit command, wherein the commit command indicates to update a status of the first content corresponding to the first version number to a committed state.

2. The method according to claim 1, wherein a quantity of servers comprised in the replication group is 2f+1, and f is a positive integer.

3. The method according to claim 1 or 2, wherein before broadcasting, by the first client, the first write command, the method further comprises:
obtaining, by the first client, the first identifier from the replication group.

4. The method according to any one of claims 1 to 3, wherein the first role is a leader, the data processing system further comprises a second client, and the method further comprises:
sending, by the second client, a read command to the first server, wherein the read command is used to request to read the first object, and the read command comprises the first identifier; and
sending, by the first server, latest content of the first object to the second client when a local maximum term identifier is the first identifier.

5. The method according to any one of claims 1 to 3, wherein the first role is a leader, the data processing system further comprises a second client, and the method further comprises:
sending, by the second client, a read command to the first server, wherein the read command comprises a second identifier different from the first identifier; and
replying, by the first server, with rejection of the read command, and sending the first identifier to the second client.

6. The method according to any one of claims 1 to 5, wherein the first role is the leader, the data processing system further comprises a third client, and the method further comprises:
sending, by the third client, a read command to the first server; and
when any one of the following conditions is satisfied, replying, by the first server, with rejection of the read command sent by the third client:
before the read command sent by the third client is received, the first server fails to retry heartbeat communication within a preset duration; or
before the read command sent by the third client is received, the first server determines, based on heartbeat information sent by a second server in the replication group, that the first identifier is invalid, wherein the heartbeat information comprises a local maximum term identifier of the second server, and the local maximum term identifier of the second server is greater than the first identifier.

7. The method according to any one of claims 1 to 6, wherein the first role is the leader, less than half of the servers in the replication group are faulty, and the faulty servers do not comprise the first server.

8. The method according to any one of claims 1 to 6, wherein the first role is the leader, when the first server is faulty, local maximum term identifiers in more than half of the servers in the replication group are a third identifier, the third identifier is greater than the first identifier, the third identifier indicates that a consensus that a third server in the replication group serves as a second role is reached in the replication group, the second role is a semi-leader, and the method further comprises:
if a server in which a local maximum term identifier is the third identifier and that is in the replication group receives a second write command within a waiting duration starting from time when the third server serves as the second role, replying, by the server, with rejection of the second write command, wherein
the waiting duration is greater than a maximum duration in which the first server is allowed to retry heartbeat communication.

9. The method according to claim 8, wherein the method further comprises:
when the third server determines that the third server is a server that currently stores latest-version data of all objects and that is in the replication group, broadcasting, by the third server, an election request, wherein the election request is used to request to elect the third server as a leader.

10. The method according to any one of claims 1 to 3, wherein the first role is a semi-leader, and when the local maximum term identifier is the first identifier and the local maximum version number corresponding to the first object is less than the first version number, writing, by the server in the replication group, the first content and the first version number comprises:
if the server in the replication group receives the first write command after a waiting duration starting from time when the first server serves as the first role, writing, by the server, the first content and the first version number when the local maximum term identifier is the first identifier and the local maximum version number corresponding to the first object is less than the first version number, wherein
the waiting duration is greater than a maximum duration in which a server serving as a leader is allowed to retry heartbeat communication.

11. The method according to claim 10, wherein the data processing system further comprises a second client, and the method further comprises:
broadcasting, by the second client, a read command, wherein the read command is used to request to read the first object, and the read command comprises the first identifier;
sending, by a server in the replication group, a read result to the second client when a local maximum term identifier is the first identifier, wherein the read result comprises a second version number and second content of the first object corresponding to the second version number, and the second version number is a local maximum version number corresponding to the first object in the server; and
when receiving the read results sent by more than half of the servers in the replication group, obtaining, by the second client, the second content of the first object corresponding to a maximum version number from the received read results.

12. A data processing method, wherein the method is applied to a client, and the method comprises:
broadcasting a write command, wherein the write command comprises a first identifier, to-be-written first content of a first object, and a to-be-written first version number, the first identifier is a local maximum term identifier of more than half of servers in a replication group, and the first identifier indicates that a consensus that a first server in the replication group serves as a first role is reached in the replication group; and
when the client receives first information sent by more than half of the servers in the replication group, broadcasting a commit command, wherein the first information indicates agreement to the write command, and the commit command indicates to update a status of the first content corresponding to the first version number to a committed state.

13. The method according to claim 12, wherein before broadcasting the write command, the method further comprises:
obtaining the first identifier from the replication group.

14. The method according to claim 12 or 13, wherein the first role is a semi-leader, and the method further comprises:
broadcasting a read command, wherein the read command is used to request to read the first object, and the read command comprises the first identifier;
receiving a read result sent by a server in the replication group, wherein the read result comprises a second version number and second content of the first object corresponding to the second version number, and the second version number is a local maximum version number corresponding to the first object in the server; and
when the client receives the read results sent by more than half of the servers in the replication group, obtaining the second content of the first object corresponding to a maximum version number from the received read results.

15. The method according to claim 12 or 13, wherein the first role is a leader, and the method further comprises:
sending a read command to the first server, wherein the read command is used to request to read the first object, and the read command comprises the first identifier; and
receiving latest content of the first object sent by the first server.

16. The method according to claim 12 or 13, wherein the first role is a leader, and the method further comprises:
obtaining a second identifier from the replication group, wherein the second identifier is a currently local maximum term identifier of more than half of the servers in the replication group, the second identifier indicates that a consensus that a second server in the replication group serves as a second role is reached in the replication group, the second role is a semi-leader, and the second identifier is greater than the first identifier; and
performing a data read operation or write operation based on the second identifier.

17. The method according to claim 16, wherein the method further comprises: sending a read command to the first server, wherein the read command is used to request to read the first object, and the read command comprises the first identifier; and
obtaining the second identifier from the replication group comprises:
obtaining the second identifier from the replication group when receiving, from the first server, a reply with rejection of the read command.

18. A data processing system, wherein the system comprises a first client and a replication group, local maximum term identifiers in more than half of servers in the replication group are a first identifier, and the first identifier indicates that a consensus that a first server in the replication group serves as a first role is reached in the replication group, wherein
the first client is configured to broadcast a first write command, wherein the first write command comprises the first identifier, to-be-written first content of a first object, and a to-be-written first version number;
a server in the replication group is configured to: when a local maximum term identifier is the first identifier and a local maximum version number corresponding to the first object is less than the first version number, write the first content and the first version number, and send first information to the first client, wherein the first information indicates agreement to the first write command; and
the first client is configured to broadcast a commit command when receiving the first information sent by more than half of the servers in the replication group, comprising the first server, wherein the commit command indicates to update a status of the first content corresponding to the first version number to a committed state.

19. The system according to claim 18, wherein a quantity of servers comprised in the replication group is 2f+1, and f is a positive integer.

20. The system according to claim 18 or 19, wherein before the first client is configured to broadcast the first write command,
the first client is further configured to obtain the first identifier from the replication group.

21. The system according to any one of claims 18 to 20, wherein the first role is a leader, and the system further comprises a second client, wherein
the second client is configured to send a read command to the first server, wherein the read command is used to request to read the first object, and the read command comprises the first identifier; and
the first server is configured to send latest content of the first object to the second client when a local maximum term identifier is the first identifier.

22. The system according to any one of claims 18 to 20, wherein the first role is a leader, and the system further comprises a second client, wherein
the second client is configured to send a read command to the first server, wherein the read command comprises a second identifier different from the first identifier; and
the first server is further configured to: reply with rejection of the read command, and send the first identifier to the second client.

23. The system according to any one of claims 18 to 22, wherein the first role is the leader, and the system further comprises a third client, wherein
the third client is configured to send a read command to the first server; and
when any one of the following conditions is satisfied, the first server is further configured to reply with rejection of the read command sent by the third client:
before the read command sent by the third client is received, the first server fails to retry heartbeat communication within a preset duration; or
before the read command sent by the third client is received, the first server determines, based on heartbeat information sent by a second server in the replication group, that the first identifier is invalid, wherein the heartbeat information comprises a local maximum term identifier of the second server, and the local maximum term identifier of the second server is greater than the first identifier.

24. The system according to any one of claims 18 to 23, wherein the first role is the leader, less than half of the servers in the replication group are faulty, and the faulty servers do not comprise the first server.

25. The system according to any one of claims 18 to 23, wherein the first role is the leader, when the first server is faulty, local maximum term identifiers in more than half of the servers in the replication group are a third identifier, the third identifier is greater than the first identifier, the third identifier indicates that a consensus that a third server in the replication group serves as a second role is reached in the replication group, and the second role is a semi-leader, wherein
if a server in which a local maximum term identifier is the third identifier and that is in the replication group receives a second write command within a waiting duration starting from time when the third server serves as the second role, the server is further configured to reply with rejection of the second write command, wherein
the waiting duration is greater than a maximum duration in which the first server is allowed to retry heartbeat communication.

26. The system according to claim 25, wherein
when the third server determines that the third server is a server that currently stores latest-version data of all objects and that is in the replication group, the third server is further configured to broadcast an election request, wherein the election request is used to request to elect the third server as a leader.

27. The system according to any one of claims 18 to 20, wherein the first role is a semi-leader, and
if the server in the replication group receives the first write command after a waiting duration starting from time when the first server serves as the first role, the server is configured to write the first content and the first version number when the local maximum term identifier is the first identifier and the local maximum version number corresponding to the first object is less than the first version number, wherein
the waiting duration is greater than a maximum duration in which a server serving as a leader is allowed to retry heartbeat communication.

28. The system according to claim 27, wherein the system further comprises a second client, wherein
the second client is configured to broadcast a read command, wherein the read command is used to request to read the first object, and the read command comprises the first identifier;
a server in the replication group is configured to send a read result to the second client when a local maximum term identifier is the first identifier, wherein the read result comprises a second version number and second content of the first object corresponding to the second version number, and the second version number is a local maximum version number corresponding to the first object in the server; and
the second client is configured to: when receiving the read results sent by more than half of the servers in the replication group, obtain the second content of the first object corresponding to a maximum version number from the received read results.

29. A data processing apparatus, wherein the apparatus is a client or is comprised in the client, and the apparatus comprises:
a sending unit, configured to broadcast a write command, wherein the write command comprises a first identifier, to-be-written first content of a first object, and a to-be-written first version number, the first identifier is a local maximum term identifier of more than half of servers in a replication group, and the first identifier indicates that a consensus that a first server in the replication group serves as a first role is reached in the replication group, wherein
the sending unit is further configured to broadcast a commit command when a receiving unit in the apparatus receives first information sent by more than half of the servers in the replication group, wherein the first information indicates agreement to the write command, and the commit command indicates to update a status of the first content corresponding to the first version number to a committed state.

30. The apparatus according to claim 29, wherein the receiving unit is further configured to obtain the first identifier from the replication group.

31. The apparatus according to claim 29 or 30, wherein the first role is a semi-leader,
the sending unit is further configured to broadcast a read command, wherein the read command is used to request to read the first object, and the read command comprises the first identifier;
the receiving unit is configured to receive a read result sent by a server in the replication group, wherein the read result comprises a second version number and second content of the first object corresponding to the second version number, and the second version number is a local maximum version number corresponding to the first object in the server; and
when the receiving unit receives the read results sent by more than half of the servers in the replication group, a processing unit in the apparatus is configured to obtain the second content of the first object corresponding to a maximum version number from the received read results.

32. The apparatus according to claim 29 or 30, wherein the first role is a leader,
the sending unit is further configured to send a read command to the first server, wherein the read command is used to request to read the first object, and the read command comprises the first identifier; and
the receiving unit is further configured to receive latest content of the first object sent by the first server.

33. The apparatus according to claim 29 or 30, wherein the first role is a leader,
the receiving unit is further configured to obtain a second identifier from the replication group, wherein the second identifier is a currently local maximum term identifier of more than half of the servers in the replication group, the second identifier indicates that a consensus that a second server in the replication group serves as a second role is reached in the replication group, the second role is a semi-leader, and the second identifier is greater than the first identifier; and
a processing unit in the apparatus is configured to perform a data read operation or write operation based on the second identifier.

34. The apparatus according to claim 33, wherein
the sending unit is further configured to send a read command to the first server, wherein the read command is used to request to read the first object, and the read command comprises the first identifier; and
the receiving unit is specifically configured to obtain the second identifier from the replication group when receiving, from the first server, a reply with rejection of the read command.

35. A data processing apparatus, wherein the apparatus comprises a processor and a memory, the memory stores computer program instructions, and the processor runs the computer program instructions to enable the apparatus to perform the method according to any one of claims 12 to 17.

36. A computer-readable storage medium, comprising computer instructions, wherein when the computer instructions are run by a processor, the method according to any one of claims 12 to 17 is implemented; or when the computer instructions are executed by a data processing system, the method according to any one of claims 1 to 11 is implemented.
